(19) Europäisches Patentamt / European Patent Office / Office européen des brevets

(11) **EP 4 254 237 A1**

(12) **EUROPEAN PATENT APPLICATION**
published in accordance with Art. 153(4) EPC

(43) Date of publication:
04.10.2023 Bulletin 2023/40

(51) International Patent Classification (IPC):
G06F 21/55 (2013.01)      G06F 21/62 (2013.01)
G06F 16/33 (2019.01)      G06F 16/31 (2019.01)
G06F 21/57 (2013.01)      G06F 16/35 (2019.01)
G06N 20/00 (2019.01)

(21) Application number: 21898654.5

(52) Cooperative Patent Classification (CPC):
G06F 16/31; G06F 16/33; G06F 16/35;
G06F 21/55; G06F 21/57; G06F 21/62; G06N 20/00

(22) Date of filing: 26.11.2021

(86) International application number:
PCT/KR2021/017571

(87) International publication number:
WO 2022/114828 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.11.2020   KR 20200163134
              27.11.2020   KR 20200163135

(71) Applicant: Korea Institute of Science &
Technology
Information
Daejeon 34141 (KR)

(72) Inventors:
• SONG, Jungsuk
  Sejong-si Sejong-si 30150 (KR)

• CHOI, Yoonsu
  Daejeon 35216 (KR)
• KIM, Kyuil
  Daejeon 35202 (KR)
• LEE, Jun
  Daejeon 34141 (KR)
• KWON, Taewoong
  Daejeon 34139 (KR)
• LEE, Younsu
  Daejeon 34127 (KR)
• CHOI, Sangsoo
  Daejeon 34079 (KR)
• LEE, Hyeakro
  Daejeon 34140 (KR)

(74) Representative: Lavoix
Bayerstraße 83
80335 München (DE)

(54) **SECURITY DATA PROCESSING DEVICE, SECURITY DATA PROCESSING METHOD, AND COMPUTER-READABLE STORAGE MEDIUM FOR STORING PROGRAM FOR PROCESSING SECURITY DATA**

(57) The disclosure below relates to a security data processing device, a security data processing method, and a computer-readable storage medium for storing a program for processing security data. An embodiment provides a security data processing method comprising the steps of: classifying security events into one or more groups; extracting meaningful words from at least one security event in each of the classified groups; labeling each of the security events as a true positive group or a false positive group on the basis of the extracted meaningful words; and quantifying the security events in the true positive group and the security events in the false positive group.

FIG. 1

## Description

### TECHNICAL FIELD

The present disclosure relates to a security data processing device, security data processing method, and computer-readable storage medium for storing a program for processing security data.

### BACKGROUND

Currently, the Science and Technology Security Center provides real-time security control services for public and research institutions based on the Threat Management System (TMS).

The real-time security control services have the following service structure: security control personnel support analysis and response based on security events detected and collected by the TMS.

However, the number of security events detected by the TMS is exponentially increasing, and as a result, it is realistically difficult for the security control personnel to analyze all large-scale security events.

In addition, since the current security control services depend on the expertise and experience of the security control personnel, it is difficult to achieve analysis normalization due to the occurrence of work bias such as focused analysis on a specific security event or the occurrence of deviation in analysis results.

That is, considering the current situation where the number of security events detected by the TMS is explosively increasing, it is necessary to innovate the current service structure for security control services, which relies on the analysis of the security control personnel.

Thus, a structure for controlling security services based on artificial intelligence models capable of replacing the analysis of the security control personnel may be considered.

The present disclosure aims to provide an artificial intelligence model platform that enables the creation of artificial intelligence models for security control.

In particular, the present disclosure aims to provide an artificial intelligence model platform that allows even ordinary users who are not familiar with security control technology to create an optimal artificial intelligence model for security control.

For intelligent cyber targeted attacks, attackers are using various new and modified attack techniques over a long period of time, and the attack techniques are emerging as a significant threat to corporate networks or organizations. Thus, various security systems and solutions are being developed to detect the attack techniques. For an Intrusion Detection System (IDS) and an Intrusion Prevention System (IPS) that detect general network intrusion, when there are attacks such as a Distributed Denial of Service (DDoS) attack, a port scanning attack, a computer cracking attack, etc., the attacks are recognized based on rules, and security events are generated. Then, the security control center analyzes the security events to recognize the intrusion.

### DISCLOSURE

### TECHNICAL PROBLEM

Embodiments are devised to address the above issues. An object of the embodiments is to provide a method (technology) for implementing an artificial intelligence model platform capable of generating an artificial intelligence model for security control.

Another object of the embodiments is to provide a security data processing device and method for generating optimal learning data for generating an artificial intelligence model.

Another object of the embodiments is to provide not only a control solution for automatically verifying security events and building learning data so as to reduce physical and time inefficiency caused when security events are manually verified but also a means of building a learning data set that guarantees a high level of accuracy in an artificial intelligence module.

A further object of the embodiments is to provide a means of building a highly consistent learning data set by establishing true positives and false positives based on similarity and meaningful words in security data.

### TECHNICAL SOLUTION

The present disclosure relates to a security data processing device, security data processing method, and computer-readable storage medium configured to store a program for processing security data.

In an aspect of the present disclosure, there is provided a method of processing security data. The method may include: classifying security events into one or more groups; extracting meaningful words from at least one security event in each of the classified groups; labeling each security event as a true positive group or a false positive group based on the extracted meaningful words; and quantifying security events in the true positive group and security events in the false positive group.

In another aspect of the present disclosure, there is provided a device configured to process security data. The device may include: an event classification unit configured to classify security events into one or more groups; a word extraction unit configured to extract meaningful words from at least one security event in each of the classified groups; a label classification unit configured to label each security event as a true positive group or a false positive group based on the extracted meaningful words; and an event quantification unit configured to quantify security events in the true positive group and security events in the false positive group.

In another aspect of the present disclosure, there is provided a device configured to process security data. The device may include: a data input unit configured to receive input security data; and a pre-processing unit configured to perform pre-processing on the input security data. The pre-processing unit may include: a decoding unit configured to decode the input security data; a personal information removal unit configured to remove personal information from the decoded security data; a special character removal unit configured to remove special characters from the security data from which the personal information is removed; an undesired character removal unit configured to remove undesired characters from the security data from which the special characters are removed; and a string segmentation unit configured to perform string segmentation on the security data from which the undesired characters are removed.

In another aspect of the present disclosure, there is provided a method of processing security data. The method may include: receiving input security data; and performing pre-processing on the input security data. The pre-processing may include: decoding the input security data; removing personal information from the decoded security data; removing special characters from the security data from which the personal information is removed; removing undesired characters from the security data from which the special characters are removed; and performing string segmentation on the security data from which the undesired characters are removed.

In a further aspect of the present disclosure, there is provided a computer-readable storage medium configured to store a program for processing security data based on the above-described aspects.

## ADVANTAGEOUS EFFECTS

Based on the above-described configurations, a security event learning data generation method/device according to embodiments may automatically label data based on similarity between security events and automate a data generation process performed by humans, thereby saving human, physical, and time effort.

Based on the above-described configurations, the security event learning data generation method/device according to the embodiments may mark security events having similar characteristics with the same label, thereby solving data inconsistency, which may be used to verify all security events and build learning data.

Based on the above-described configurations, the security event learning data generation method/device according to the embodiments may reduce the cost of relearning required for artificial intelligence models and also reduce the time required for learning.

In the security event learning data generation method/device according to the embodiments, a data-based data building method for making objective determinations based on data independently of human decision-making and bias is used, thereby securing consistency based on to the characteristics of a data set.

The security event learning data generation method/device according to the embodiments may enable both real-time verification and post-verification of data quality by building learning data.

The security event learning data generation method/device according to the embodiments may effectively detect new and variant attacks or build data sets for detecting the new and variant attacks.

According to an artificial intelligence model platform and an artificial intelligence model platform operation method according to embodiments, the artificial intelligence model platform that enables the creation of artificial intelligence models for security control may be implemented. In particular, optimal feature information and optimal normalization methods that are directly related to the performance of an artificial intelligence model may be recommended/applied, so that the artificial intelligence model platform may allow even general users who are not familiar with security control technology to create an optimal artificial intelligence model for security control.

Accordingly, according to the embodiments, an optimal artificial intelligence model suitable for the purpose and requirements for security control may be flexibly and diversely created and applied, and thus the quality of security control services may be significantly improved. In addition, it may be expected to support the establishment of a breach response system based on artificial intelligence to efficiently analyze signs of large-scale cyberattacks and abnormal behaviors.

The embodiments are to provide a security data processing device and method for generating optimal learning data for generating an artificial intelligence model.

## BRIEF DESCRIPTION OF THE DRAWINGS

FIG. 1 is a conceptual diagram illustrating an artificial intelligence model platform according to an embodiment of the present disclosure.

FIG. 2 is a block diagram illustrating components of an artificial intelligence model platform according to an embodiment of the present disclosure.

FIG. 3 is a block diagram illustrating components of a feature information recommendation device according to an embodiment of the present disclosure.

FIG. 4 is a block diagram illustrating components of a normalization recommendation device according to an embodiment of the present disclosure.

FIG. 5 illustrates a process for generating learning data for security events according to embodiments.

FIG. 6 illustrates an example of a security event learning data generation device according to embodiments.

FIG. 7 illustrates examples of a security event learning data generation method and/or security event learning data generation device according to embodiments.

FIG. 8 illustrates exemplary operations of a label determination unit according to embodiments.

FIG. 9 is a flowchart illustrating a security event learning data generation method according to embodiments.

FIG. 10 is a block diagram of a security data pre-processing device according to other embodiments.

FIG. 11 illustrates regular expressions according to other embodiments.

FIG. 12 is a flowchart illustrating a pre-processing process by a pre-processing unit according to other embodiments.

FIG. 13 is a flowchart of a process for operating an artificial intelligence platform for security control according to other embodiments.

## BEST MODE FOR CARRYING OUT THE DISCLOSURE

Hereinafter, embodiments will be described with reference to the accompanying drawings for a better understanding of the embodiments.

Currently, real-time security control services provided by the Science and Technology Security Center have a service structure in which security control personnel support analysis and response based on security events detected and collected by the Threat Management System (TMS).

However, the number of security events detected by the TMS is exponentially increasing, and as a result, it is realistically difficult for the security control personnel to analyze all large-scale security events.

In addition, since the current security control services depend on the expertise and experience of the security control personnel, it is difficult to achieve analysis normalization due to the occurrence of work bias such as focused analysis on a specific security event or the occurrence of deviation in analysis results.

That is, considering the current situation where the number of security events detected by the TMS is explosively increasing, it is necessary to innovate the current service structure for security control services, which relies on the analysis of the security control personnel.

Thus, a structure for controlling security services based on artificial intelligence models capable of replacing the analysis of the security control personnel may be considered.

The present disclosure aims to provide an artificial intelligence model platform that enables the creation of artificial intelligence models for security control.

In particular, the present disclosure aims to provide an artificial intelligence model platform that allows even ordinary users who are not familiar with security control technology to create an optimal artificial intelligence model for security control.

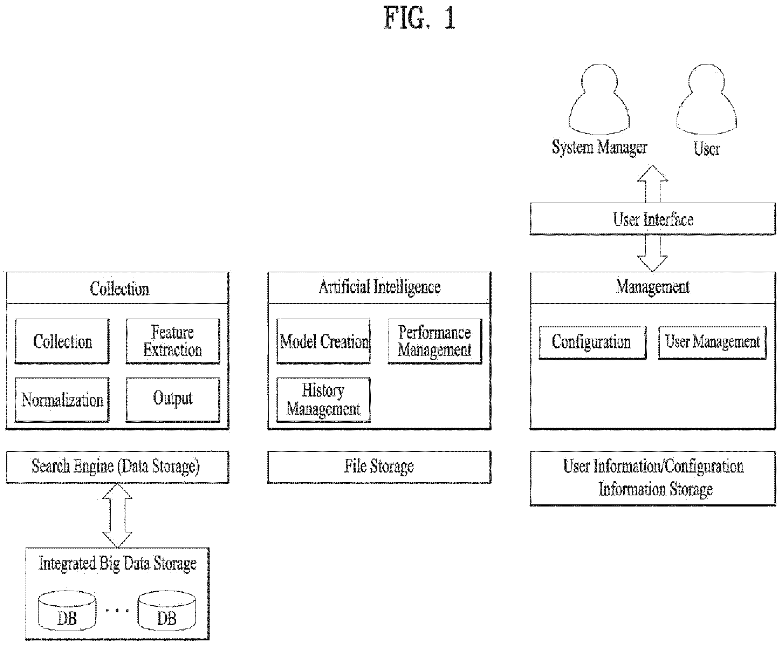

FIG. 1 conceptually illustrates an embodiment of an artificial intelligence model platform proposed in the present disclosure.

As shown in FIG. 1, the artificial intelligence model platform of the present disclosure may include: a collection function that collects and processes various data required to create an artificial intelligence model for security control; an artificial intelligence function that creates the artificial intelligence model based on the various data collected and processed by the collection function and manages performance and history related to the artificial intelligence model; and a management function responsible for various configurations related to the collection/artificial intelligence functions and user management based on a User Interface (UI) provided to system administrators and general users.

The artificial intelligence model platform of the present disclosure may include a search engine that periodically collects newly generated original security data from integrated big data storage. In addition, the artificial intelligence model platform may use the search engine as data storage by loading various data obtained from the collection function into the search engine.

In this case, various modules (e.g., collection, feature extraction, normalization, output, etc.) belonging to the collection function may operate based on the search engine (data storage).

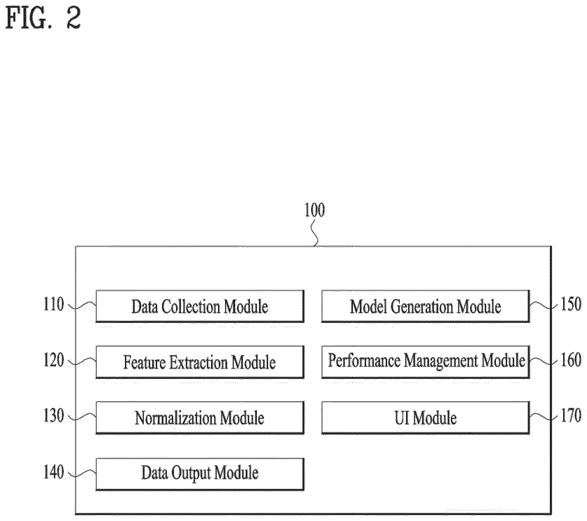

Hereinafter, components of the artificial intelligence model platform according to the embodiment of the present disclosure and the role of each component will be described in detail with reference to FIG. 2.

The artificial intelligence model platform 100 of the present disclosure may include a data collection module 110, a feature extraction module 120, a normalization module 130, a data output module 140, and a model generation module 150.

The artificial intelligence model platform 100 of the present disclosure may further include a performance management module 160 and a UI module 170.

All or at least some of the components of the artificial intelligence model platform 100 may be implemented with hardware or software modules or in combinations of hardware and software modules.

Herein, the software modules may be understood as, for example, instructions executed by a processor configured to control operation of the artificial intelligence model platform 100. The instructions may be loaded in a memory of the artificial intelligence model platform 100.

Eventually, the artificial intelligence model platform 100 according to the embodiment of the present disclosure may realize the method proposed in the present disclosure, that is, the method of enabling the creation of an optimal artificial intelligence model for security control, based on the above-described components. Hereinafter, each component of the artificial intelligence model platform 100 for realizing the corresponding method will be described in detail.

First, the UI module 170 may provide a UI to configure at least one of specific search conditions of the data collection module 110, feature information of the feature extraction module 120, normalization methods of the normalization module 130, and conditions of the data output module 140.

For example, the UI module 170 may provide the UI to configure at least one of the specific search conditions of the data collection module 110, feature information of the feature extraction module 120, normalization methods of the normalization module 130, and conditions of the data output module 140, depending on the operation of a system administrator or a normal user (hereinafter referred to as a user) who desires to create an artificial intelligence model for security control through the artificial intelligence model platform 100 of the present disclosure.

Accordingly, the UI module 170 may store/manage various configurations related to the collection/artificial intelligence functions in user information/configuration information storage based on the provided UI. Specifically, the various configurations may include the specific search conditions of the data collection module 110, feature information of the feature extraction module 120, normalization methods of the normalization module 130, and conditions of the data output module 140, which are to create an artificial intelligence model.

The data collection module 110 may collect security events to be used as learning/test data from original security data according to the specific search conditions, that is, according to the specific search conditions predetermined by the user.

For example, a date (or period), the number of cases, and an Internet Protocol (IP) to be used as learning/test data may be set to the specific search conditions of the data collection module 110.

Accordingly, when the specific search conditions are a date (or period), the data collection module 110 may collect security events within the configured date (or period) from original security data.

Alternatively, when the specific search conditions are the number of cases, the data collection module 110 may collect a configured number of security events (e.g., 500,000 cases) from original security data at a designated point in time.

Alternatively, when the specific search conditions are an IP, the data collection module 110 may collect security events in which the configured IP matches a source IP or destination IP from original security data

Any combinations of a date (or period), the number of cases, an IP, etc. may be set to the specific search conditions.

In this case, the data collection module 110 may also collect security events according to a combination of a configured date (or period), a configured number of cases, and a configured IP from original security data.

More specifically, the maximum number of cases that the data collection module 110 is capable of simultaneously collecting may be limited in order to reduce system loads caused when the data collection module 110 collects security events from original security data as described above.

For example, when the data collection module 110 collects security events within a configured date (or period) from original security data, it may be assumed that the total number of security events within the configured date (or period) is 1,000,000 and the maximum number of cases capable of being simultaneously collected is 500,000.

In this case, the data collection module 110 may determine that the total number of cases collected this time exceeds the maximum number of cases capable of being simultaneously collected. Thus, the data collection module 110 may store the remaining collected cases except for the maximum collectable cases among all of the cases collected this time in a queue and then proceed sequentially.

In other words, the data collection module 110 may collect/process 500,000 cases, which are the maximum collectable cases, in chronological order among 1,000,000 cases, which are all of the cases collected this time. The data collection module 110 may store 500,000 cases, which are the rest except for the maximum collectable cases, in the queue and then sequentially perform collection/processing.

In this case, for the 500,000 cases that proceed after being stored in the queue, the data collection module 110 may collect security events only for data prior to the occurrence of the cases among the original security data.

In other words, for the 500,000 cases that proceed after being stored in the queue among the 1,000,000 cases, which are all of the cases collected this time, since there is a difference between the time when the cases occur and the time when the cases are actually collected/processed, security events may be collected only for data prior to the occurrence of the cases among the original security data in order to avoid errors in the security event collection, which are caused by the difference.

It has been previously mentioned that the artificial intelligence model platform 100 of the present disclosure includes a search engine that periodically collects newly generated original security data from integrated big data storage.

In this case, the data collection module 110 may collect security data from original security data in the search engine (data storage).

Since the integrated big data storage is used not only by the artificial intelligence model platform 100 of the present disclosure but also by other systems, if a large amount of data (security events) is collected from the integrated big data storage, loads on the integrated big data storage may affect the other systems.

However, according to the present disclosure (more particularly, the data collection module 110), since the data collection module 110 collects security events based on the search engine that periodically collects only newly created original security data from the integrated big data storage, instead of directly collecting the security events from the integrated big data storage, the load problem in the integrated big data storage may be prevented.

The feature extraction module 120 may extract predetermined feature information from security events collected by the data collection module 110, and more particularly, feature information predetermined by the user.

When an artificial intelligence model is created, it is necessary to find out what feature data (security events) has and convert the feature into a vector in order to classify the data (security events) with an artificial intelligence algorithm. This process is referred to as a feature information extraction process.

The feature extraction module 120 may be responsible for performing the process of extracting feature information from security events collected by the data collection module 110.

In addition, feature information on each security event extracted by the feature extraction module 120 may be used for machine learning (e.g., deep learning) to create an artificial intelligence model, which will be described later.

In particular, in the present disclosure, the user may configure a single feature or a composite feature as feature information.

Herein, the single feature refers to features that may be extracted from one security event.

For example, the single feature may include a detection time, a source IP, a source port, a destination IP, a destination port, a protocol, a security event name, a security event type, the number of attacks, an attack direction, a packet size, an automatic analysis result, a dynamic analysis result, an agency number, the presence of a jumbo payload, a payload, a payload to which Word2Vec conversion is applied, etc.

For reference, the Word2Vec payload conversion is a method of converting a word into a vector. In the Word2Vec payload conversion, the vector of a word may be determined by a relationship between neighboring words. For general sentences, words may be distinguished based on spacing. However, since it is difficult to separate the payload into semantic units and the payload contains a large amount of special characters, pre-processing may be required to apply Word2Vec.

In the present disclosure, the following four steps may be performed as the pre-processing for applying Word2Vec.

1) Converting a hexadecimal encoded string into an ASCII string (except for ASCII code values (32 to 127), the hexadecimal encoded string is converted to spaces)
2) Processing URL-encoded parts (%25 -> '%', %26 -> '&', %2A -> '*' ...)
3) Replacing special symbols except for '@', '\', '-', ':', '%', '_', '.', '!', '/', and ''' with spaces and replacing all uppercase letters with lowercase letters
4) Applying the Word2Vec algorithm except for words consisting of one letter

The composite feature refers to one feature that may be extracted by applying aggregation and statistical techniques to multiple security events.

For example, a security event group may be formed based on a period or the number of cases, and one feature (e.g., operation result) that may be extracted by calculation (e.g., aggregation and statistical techniques) within the group may belong to the composite feature.

For example, it is assumed that a security event group is formed based on a specific period (8.22 to 9.3) as shown in Table 1.

[Table 1]

|  | time | Source IP | Source Port | Event name | Destination IP | Destination Port |
|---|---|---|---|---|---|---|
| 1 | 08.22 | 100.100.100.10 0 | 80 | AAA | 111.111.111.11 | 230. |
| 2 | 08.25 | 100.100.100.10 0 | 80 | CCC | 123.123.12.12 | 222 |
| 3 | 08.25 | 100.100.100.10 0 | 1234 | AAA | 111.111.111.11 | 1122 |
| 4 | 08.28 | 100.100.100.10 0 | 80 | AAA | 111.111.111.11 | 1562 |
| 5 | 08.29 | 10.10.10.2 | 10022 | CCC | 10.10.10.1 | 1292 |
| 6 | 08.30 | 100.100.100.10 0 | 22 | AAA | 111.111.111.11 | 1929 |
| 7 | 08.30 | 10.10.10.1 | 1234 | DDD | 10.10.10.2 | 1080 |
| 8 | 08.30 | 100.100.100.10 0 | 22 | BBB | 10.100.10.100 | 2580 |
| 9 | 08.31 | 50.50.80.60 | 88 | CCC | 10.10.10.1 | 6543 |
| 10 | 09.03 | 100.100.100.10 0 | 8080 | CCC | 10.10.10.1 | 9874 |

One feature (e.g. 4) that may be extracted by the calculation within the security event group (e.g., source IP, destination IP, and the number of security events with security event names 100.100.100.100/111.111.111.11/AAA) may belong to the composite feature. Accordingly, the feature extraction module 120 may extract predetermined feature information (single feature and/or composite feature) from security events collected by the data collection module 110.

The normalization module 130 may perform predetermined normalization on feature information extracted from security events.

Normalization refers to a process of adjusting the ranges of values of extracted features to be constant. When field A has a range of 50 to 100 and when field B has a range of 0 to 100, even if the fields have the same value, for example, 50, their meanings may be different because the values are measured by different scales. Therefore, a process of adjusting different fields to a common scale such that the fields represent the equivalent meaning may be required, which is called normalization.

The normalization module 130 may perform normalization on feature information extracted from security events by adjusting the values of different fields to a common scale according to a predetermined normalization method, so that the fields represent the equivalent meaning.

The predetermined normalization method may mean a normalization method predetermined by the user.

In the artificial intelligence model platform 100 of the present disclosure, the following three normalization methods are provided so that users may determine a normalization method in advance.

Equation 1 corresponds to feature scaling normalization of [a, b], Equation 2 corresponds to mean normalization of [-1, 1], and Equation 3 corresponds to standard score normalization.

[Equation 1]

$$x' = a + \frac{(\bar{x} - \min(x))(b - a)}{\max(x) - \min(x)}$$

$\max(x)$ : The maximum value of x  $\quad \min(x)$ : The minimum value of x  $\quad \bar{x}$ : The original value of x  $\quad x'$ : The substituted value of x

$a$ : The minimum value specified by the user  $\quad b$ : The maximum value specified by the user

[Equation 2]

$$x' = \frac{\bar{x} - \text{average}\ (x)}{\max(x) - \min(x)}$$

※ $\max(x)$ : The maximum value of x    $\min(x)$ : The minimum value of x    $\bar{x}$ : The original value of x    $x'$ : The substituted value of x

$\text{average}(x)$ : The average value of x

[Equation 3]

$$x' = \frac{\bar{x} - \text{average}(x)}{\sigma}$$

※ $\bar{x}$ : The original value of x    $x'$ : The substituted value of x    $\text{average}(x)$ : The average value of x

$\sigma$ : The standard deviation of x

The normalization module 130 may perform the normalization on the feature information extracted from the security events according to the normalization method predetermined by the user among the three normalization methods described above.

The data output module 140 may extract learning or test data from security events, where specific information normalization is completed, according to given conditions, i.e., conditions predetermined (or given) by the user.

Specifically, the data output module 140 may output the security events, where the specific information normalization is completed, to a screen or a file according to a value, order, format, learning/test data ratio, file division method, etc. that the user desires.

The output learning or test data may be managed through a database or file storage for each date and each user, so that the output learning or test data may be used immediately to create an artificial intelligence model.

The model generation module 150 may generate an artificial intelligence model for security control by applying an artificial intelligence algorithm to the learning data managed by the data output module 140 through the output/file storage.

In other words, the model generation module 150 may generate the artificial intelligence model for security control, for example, an artificial intelligence model operating according to a user's request by applying the artificial intelligence algorithm to the learning data.

For example, the model generation module 150 may generate an artificial intelligence detection model for detecting the presence of a malicious security event according to a user request. Alternatively, the model generation module 150 may generate an artificial intelligence classification model for classifying true/false positives of security events.

Specifically, the model generation module 150 may generate the artificial intelligence model for security control based on the learning data managed by the data output module 140 through the output/file storage in the data output module 140 according to the artificial intelligence algorithm, for example, a machine learning (e.g., deep learning) algorithm pre-selected by the user.

For example, the model generation module 150 may use a learning loss function that represents the deviation between a result predicted with models in machine learning technology based on backward propagation calculation and an actual result, in order to generate an artificial intelligence model, where the deviation of the learning loss function becomes zero, based on the learning data.

As described above, the artificial intelligence model platform 100 of the present disclosure may provide a platform environment that enables the creation of artificial intelligence models for security control based on an UI with no separate programming, so that even general users who are not familiar with security control technology are allowed to create artificial intelligence models satisfying their purposes and requirements for security control.

In addition, the performance management module 160 of the artificial intelligence model platform 100 of the present disclosure may use test data managed by the data output module 140 through the output/file storage to test the accuracy of the created artificial intelligence model.

The performance management module 160 may manage an artificial intelligence model created by the model generation module 150. That is, the performance management module 160 may record and manage 'who', 'when', 'what data', 'what field', 'what sampling method', 'what normalization method' and 'what model' are used to create the artificial intelligence model. In addition, the performance management module 160 may record and manage performance information on how much performance (correct answer rate) the created artificial intelligence model has in the system (file storage).

In addition, the performance management module 160 may compare conditions for model creation with performance at a glance by managing the performance information, so that it may be easier to check the correlation between the conditions and performance.

Considering that the present disclosure provides a platform environment that allows even ordinary users who are not familiar with security control technology to create an artificial intelligence model, it may be necessary to test the accuracy (performance) of the artificial intelligence model created in the platform environment of the present disclosure.

Specifically, the performance management module 160 may test the accuracy of the created artificial intelligence model based on test data (security events for which true/false positive classification results and malicious detection results are known) managed by the data output module 140 through the output/file storage.

For example, the performance management module 160 may output the ratio of how well a result predicted with the model matches an actual result as the accuracy (performance) of the model by testing the created artificial intelligence model based on the test data.

To create an artificial intelligence model, which features are used and which normalization method is applied have a great influence on the performance (accuracy) of the model.

However, it would be difficult for ordinary users, especially those who are not familiar with security control technology, to combine/configure feature information capable of achieving optimal performance to create artificial intelligence models that the users desire.

Accordingly, the feature extraction module 120 of the present disclosure may recommend changing the feature information to increase the accuracy of the created artificial intelligence model based on results of the accuracy test performed by the performance management module 160.

It would also be difficult for ordinary users, especially those who are not familiar with security control technology, to understand and configure a normalization method capable of achieving optimal performance to create artificial intelligence models that the users desire.

In addition, the normalization module 130 of the present disclosure may recommend changing the normalization method to increase the accuracy of the artificial intelligence model.

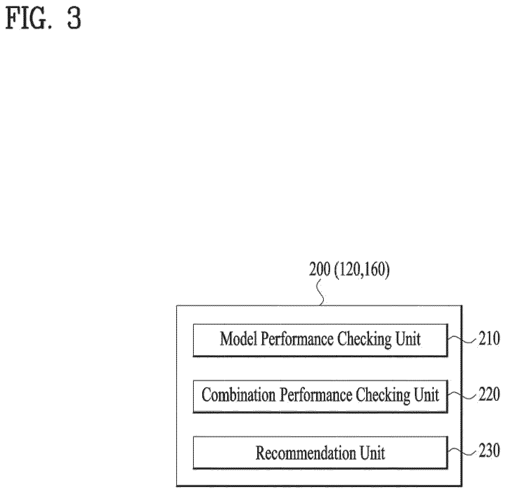

Hereinafter, a method of recommending a change in feature information to increase the accuracy of an artificial intelligence model, and more particularly, a feature information recommendation device configured to realize the corresponding method will be described in detail with reference to FIG. 3.

FIG. 3 illustrates components of the feature information recommendation device according to an embodiment of the present disclosure.

As shown in FIG. 3, the feature information recommendation device 200 of the present disclosure may include a model performance checking unit 210, a combination performance checking unit 220, and a recommendation unit 230.

All or at least some of the components of the feature information recommendation device 200 may be implemented with hardware or software modules or in combinations of hardware and software modules.

Herein, the software modules may be understood as, for example, instructions executed by a processor configured to control operation of the feature information recommendation device 200. The instructions may be loaded in a memory of the feature information recommendation device 200.

Eventually, the feature information recommendation device 200 according to the embodiment of the present disclosure may realize the method proposed in the present disclosure, that is, the method of recommending a change in feature information to increase the accuracy of an artificial intelligence model, based on the above-described components. Hereinafter, each component of the feature information recommendation device 200 for realizing the corresponding method will be described in detail.

The model performance checking unit 210 may check the model performance of an artificial intelligence model created based on the learning of predetermined feature information among all feature information that may be configured when the artificial intelligence model is created.

That is, the model performance checking unit 210 may check the performance (accuracy) of an artificial intelligence model created based on the learning of feature information configured by the user.

Hereinafter, the present disclosure will be described on the assumption of an artificial intelligence model learned/created by the artificial intelligence model platform 100 of the present disclosure based on feature information configured by the user (hereinafter the information is referred to as user-configured feature information).

The model performance checking unit 210 may check the model performance of an artificial intelligence model created based on the learning of the user-configured feature information from the artificial intelligence model platform 100 as described above.

For example, the model performance checking unit 210 may test/check the model performance (accuracy) of an artificial intelligence model based on test data (security events for which true/false positive classification results and malicious detection results are known) output from the artificial intelligence model platform 100 (particularly, the data output module 140) of the present disclosure.

Accordingly, for the artificial intelligence model created by the artificial intelligence model platform 100 (particularly, the data output module 140) of the present disclosure, the model performance checking unit 210 may output the ratio of how well a result predicted with the model matches an actual result as the accuracy (performance) of the model by testing the created artificial intelligence model based on the test data.

The combination performance checking unit 220 may configure multiple feature information combinations among all feature information and check the performance of an artificial intelligence model created based on learning for each feature information combination.

Specifically, the combination performance checking unit 220 may configure various feature information combinations in addition to user-configured feature information, which is learned this time to create an artificial intelligence model, among all feature information configurable when the artificial intelligence model is created. Then, the combination performance checking unit 220 may check the performance of the artificial intelligence model created based on learning for each feature information combination.

The recommendation unit 230 may recommend a specific feature information combination with higher performance than the performance checked by the model performance checking unit 210, that is, the performance of the artificial intelligence model created based on the current user configuration, among the performance of the multiple feature information combinations checked by the combination performance checking unit 220,

Hereinafter, specific embodiments for recommending a specific feature information combination will be described.

According to one embodiment, the multiple feature information combinations configured by the combination performance checking unit 220 may be obtained by sequentially adding at least one piece of the remaining feature information except for the user-configured feature information among all feature information to the user-configured feature information, which is learned this time to create the artificial intelligence model.

Hereinafter, the present disclosure will be described on the assumption of user-configured feature information (e.g., a, b, c, d, e, f (k=6)), which is learned this time to create an artificial intelligence model, among all feature information (e.g., a, b, c, ..., z (n=26)). In this case, it is assumed that the performance (mk) of the artificial intelligence model performance checked by the model performance checking unit 210 is 85%.

Accordingly, the combination performance checking unit 220 may configure the multiple feature information combinations by sequentially adding at least one piece of the remaining feature information except for the user-configured feature information (a, b, c, d, e, f) among all feature information (n) to the user-configured feature information (a, b, c, d, e, f).

In one example, the combination performance checking unit 220 may sequentially add one to (n-k) pieces of feature information among the remaining feature information except for the user-configured feature information (a, b, c, d, e, f) among all feature information (n) to the user-configured feature information (a, b, c, d, e, f), which is configured by the user, in order to configure the multiple feature information combinations as follows

$$a, b, c, d, e, f, g \rightarrow m(k+1)1 \rightarrow 82\%$$

$$a, b, c, d, e, f, h \rightarrow m(k+1)2 \rightarrow 80\%$$

$$...$$

$$a, b, c, d, e, f, g, h, i \rightarrow m(k+3)1 \rightarrow 88\%$$

$$...$$

$$a, b, c, d, e, f, ..., z \rightarrow m(n) \rightarrow 85\%$$

As described above, for each feature information combination, the combination performance checking unit 220 may check the following performance of the artificial intelligence model created based on learning: 82%, 80%, ..., 88%, ..., and 85%.

In this case, among the performance of the multiple feature information combinations, the recommendation unit 230 may select/recommend the top N (e.g., four) pieces of feature information having higher performance than the performance (mk = 85%) of the artificial intelligence model created based on the current user configuration as a specific feature information combination.

The value of N may be designated/changed by the system administrator or user.

In another example, the combination performance checking unit 220 may sequentially add one pieces of feature information among the remaining feature information except for the user-configured feature information (a, b, c, d, e, f) among all feature information (n) to the user-configured feature information (a, b, c, d, e, f), which is configured by the user, in order to configure the multiple feature information combinations as follows

$$a, b, c, d, e, f, g \rightarrow m(k+1)1 \rightarrow 82\%$$

$$a, b, c, d, e, f, h \rightarrow m(k+1)2 \rightarrow 80\%$$

$$...$$

$$a, b, c, d, e, f, z \rightarrow m(k+1)\zeta \rightarrow 90\%$$

As described above, for each feature information combination, the combination performance checking unit 220 may check the following performance of the artificial intelligence model created based on learning: 82%, 80%, ..., 90%.

In this case, among the performance of the multiple feature information combinations, the recommendation unit 230 may select/recommend the top N (e.g., three) pieces of feature information having higher performance than the performance (mk = 85%) of the artificial intelligence model created based on the current user configuration as a specific feature information combination.

The value of N may be designated/changed by the system administrator or user.

According to another embodiment, the combination performance checking unit 220 may perform a combination configuration process for configuring a plurality of feature information combinations by sequentially adding one piece of feature information among the remaining feature information except for the user-configured feature information (a, b, c, d, e, f) among all feature information (n) to the user-configured feature information (a, b, c, d, e, f), that is, predetermined feature information.

In this case, the combination performance checking unit 220 may check the following performance for each feature information combination: 82%, 80%, ..., 90%, as described above.

$$a, b, c, d, e, f, g \rightarrow m(k+1)1 \rightarrow 82\%$$

$$a, b, c, d, e, f, h \rightarrow m(k+1)2 \rightarrow 80\%$$

$$...$$

$$a, b, c, d, e, f, z \rightarrow m(k+1)\zeta \rightarrow 90\%$$

The combination performance checking unit 220 may perform a reconfiguration process for reconfiguring as feature information each feature information combination having higher performance than the performance (mk = 85%) of the artificial intelligence model generated based on the current user configuration among the multiple feature information combinations.

In other words, the combination performance checking unit 220 may delete feature information combinations having performance lower than or equal to the performance (mk = 85%) of the artificial intelligence model among the multiple feature information combinations and reconfigure each feature information combination having higher performance than the performance (mk = 85%) of the artificial intelligence model as feature information. Then, the combination performance checking unit 220 may perform a reconfiguration process to repeatedly perform the combination configuration process for each feature information that is reconfigured as shown in Table 2 below.

$$a, b, c, d, e, f, l \rightarrow m(k+1)1 \rightarrow 87\%$$

$$a, b, c, d, e, f, m \rightarrow m(k+1)2 \rightarrow 86\%$$

$$a, b, c, d, e, f, n \to m(k+1)3 \to 86\%$$

[Table 2]

| | |
|---|---|
| $k = 0$<br>$f = \{a, b, c, d, e, f\}$ | a, b, c, d, e, f, l $\Rightarrow m_i \Rightarrow m_i \Rightarrow$ 87%<br><br>a, b, c, d, e, f, m $\Rightarrow m_i \Rightarrow m_i \Rightarrow$ 86%<br><br>a, b, c, d, e, f, n $\Rightarrow m_i \Rightarrow m_i \Rightarrow$ 86% |
| $k = 1$<br>$f = \{a, b, c, d, e, f, l\}$ | **Addition of l →** $k - 1 = 3$<br><br>a, b, c, d, e, f, l, g $\Rightarrow m_{k-1}{}^1 \Rightarrow m_{k-1} \Rightarrow$ 82%<br><br>a, b, c, d, e, f, l, h $\Rightarrow m_{k-1}{}^2 \Rightarrow m_{k-1} \Rightarrow$ 88%<br><br>.....<br><br>a, b, c, d, e, f, l, z $\Rightarrow m_{k-1}{}^{u} \Rightarrow m_{k-1}{}^{u} \Rightarrow$ 83% |
| $k = 1$<br>$f = \{a, b, c, d, e, f, m\}$ | **Addition of m →** $k - 1 = 3$<br><br>a, b, c, d, e, f, m, g $\Rightarrow m_{k-1}{}^1 \Rightarrow m_{k-1} \Rightarrow$ 82%<br><br>a, b, c, d, e, f, m, h $\Rightarrow m_{k-1}{}^2 \Rightarrow m_{k-1} \Rightarrow$ 82%<br><br>.....<br><br>a, b, c, d, e, f, m, z $\Rightarrow m_{k-1}{}^{u} \Rightarrow m_{k-1}{}^{u} \Rightarrow$ 83% |
| $k = 1, f = \{a, b, c, d, e, f, n\}$ | **Addition of n →** $k - 1 = 3$<br><br>a, b, c, d, e, f, n, g $\Rightarrow m_{k-1}{}^1 \Rightarrow m_{k-1} \Rightarrow$ 81%<br><br>a, b, c, d, e, f, n, h $\Rightarrow m_{k-1}{}^2 \Rightarrow m_{k-1} \Rightarrow$ 82%<br><br>.....<br><br>a, b, c, d, e, f, n, z $\Rightarrow m_{k-1}{}^{u} \Rightarrow m_{k-1}{}^{u} \Rightarrow$ 85% |

The combination performance checking unit 220 may repeat the above-described combination configuration process and reconfiguration process. If there is no feature information combination with higher performance than the performance (mk = 85%) of the artificial intelligence model generated based on the current user configuration among the multiple feature information combinations, the combination performance checking unit 220 may perform a process of selecting previous feature information as a specific feature information combination and transmitting the feature information to the recommendation unit 230. In this case, the recommendation unit 230 may recommend the feature information transmitted from the combination performance checking unit 220 as the specific feature information combination with higher performance than the performance (mk = 85%) of the artificial intelligence model generated based on the current user configuration among the performance of the multiple feature information combinations.

According to the present disclosure, an optimal feature with optimal performance (accuracy) may be recommended/applied for users who create artificial intelligence models for security control based on an UI in an environment provided by the artificial intelligence model platform 100, so that even general users who are not familiar with security control technology may be allowed to create optimal artificial intelligence models for security control.

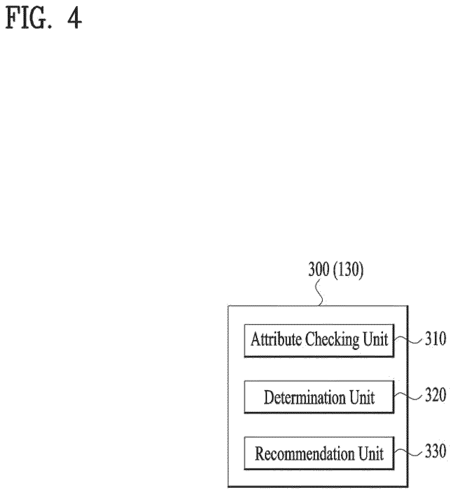

Hereinafter, a method of recommending a change in normalization to increase the accuracy of an artificial intelligence model, and more particularly, a normalization recommendation device configured to realize the corresponding method will be described in detail with reference to FIG. 4.

FIG. 4 illustrates components of the normalization recommendation device according to an embodiment of the present disclosure.

As shown in FIG. 4, the normalization recommendation device 300 of the present disclosure may include an attribute checking unit 310, a determination unit 320, and a recommendation unit 330.

All or at least some of the components of the normalization recommendation device 300 may be implemented with hardware or software modules or in combinations of hardware and software modules.

Herein, the software modules may be understood as, for example, instructions executed by a processor configured to control operation of the normalization recommendation device 300. The instructions may be loaded in a memory of the normalization recommendation device 300.

Eventually, the normalization recommendation device 300 according to the embodiment of the present disclosure may realize the method proposed in the present disclosure, that is, the method of recommending a change in normalization to increase the accuracy of an artificial intelligence model, based on the above-described components. Hereinafter, each component of the normalization recommendation device 300 for realizing the corresponding method will be described in detail.

The attribute checking unit 310 may check the attributes of feature information used for learning to create an artificial intelligence model.

In this case, the feature information used for learning to create the artificial intelligence model may be feature information directly configured by the user based on the UI among all feature information that may be configured when the artificial intelligence model is created or feature information to which a specific feature information combination recommended from among all feature information is applied/configured.

In addition, the attributes of the feature information may be largely divided into numeric attributes and category attributes.

That is, the attribute checking unit 310 may check whether the attributes of feature information (directly configured or applied in recommendation) used for learning to generate an artificial intelligence model are numeric attributes, category attributes, or numeric and category attributes.

The determination unit 320 may determine normalization methods according to the attributes of the feature information checked by the attribute checking unit 310 among all configurable normalization methods.

Specifically, before determining the normalization methods according to the attributes of the feature information, the determination unit 320 may first determine whether the same normalization method is applied to all current feature information fields or whether a normalization method is applied to each of all current feature information fields.

When only numeric and/or category data exist in all current feature information fields (including single feature cases), the determination unit 320 may determine that the same normalization method is applied to all current feature information fields.

In this case, if the attributes of the feature information are numeric attributes, the determination unit 320 may determine a first normalization method according to the overall numerical pattern of the feature information. If the attributes of the feature information are category attributes, the determination unit 320 may determine a second normalization method in which feature values other than 0 are expressed only at positions designated for each category of the feature information in a vector defined by the total number of categories of the feature information. If the attributes of the feature information are numeric and category attributes, the determination unit 320 may determine the second normalization method and the first normalization method.

Specifically, the first normalization method may include a standard score normalization method, a mean normalization method, and a feature scaling normalization method according to predefined priorities (see Equations 1, 2, and 3).

If only numeric data exists in all feature information fields, the determination unit 320 may determine that the attributes of the feature information are numeric attributes. In this case, the determination unit 320 may determine the first normalization method according to the overall numerical pattern of the feature information.

In this case, the determination unit 320 may determine the standard score normalization method, the mean normalization method, and the feature scaling normalization method in order of the priorities of the first normalization method. Based on the standard deviation of the overall numerical pattern of the feature information and the presence of upper and lower limits of a normalization scaling range, the determination unit 320 may determine an applicable normalization method having the highest priority among the first normalization methods.

If only category data exists in all feature information fields, the determination unit 320 may determine that the attributes of the feature information are category attributes. In this case, the determination unit 320 may determine the second normalization method in which feature values other than 0 are expressed only at positions designated for each category of the feature information in the vector defined by the total number of categories of the feature information.

To generate an artificial intelligence model by applying an artificial intelligence algorithm (e.g., machine learning) to learning data, it is necessary to convert the data into numeric data capable of being understood by the machine. In the present disclosure, one-hot encoding may be adopted as the conversion method (second normalization method).

Accordingly, when the attributes of the feature information are category attributes, the determination unit 320 may determine a second normalization method_one-hot encoding in which non-zero feature values (e.g., 1) are expressed only at positions designated for each category of the feature information in the vector defined by the total number of categories of the feature information.

To briefly explain the second normalization method_one-hot encoding, it is assumed that feature information has category attributes called fruit, and apples, pears, and persimmons (expressed as a three-dimensional vector because there are three types of fruit) are the total number of categories.

In this case, feature information having apples, pears, and persimmons as data may be expressed as follows according to the second normalization method_one-hot encoding.

Apple = {1, 0, 0}
Pear = {0, 1, 0}
Persimmon = {0, 0, 1}

If numeric and category data exist in all feature information fields, the determination unit 320 may determine that the attributes of the feature information are numeric and category attributes. In this case, the determination unit 320 may determine the second normalization method and first normalization method as described above.

That is, if the attributes of the feature information are numeric and category attributes, the determination unit 320 may first apply the above-described second normalization method_one-hot encoding to data with category attributes in the feature information. Thereafter, the determination unit 320 may determine the second normalization method and the first normalization method in order to determine a normalization method having the highest priority among the first normalization methods based on the standard deviation of the overall numerical pattern of the feature information and the presence of upper and lower limits of the normalization scaling range.

When the feature information is related to the composite feature (one feature that may be extracted by applying aggregation and statistical techniques to multiple security events), the determination unit 320 may determine that the normalization method is applied for each of all feature information fields.

For a field with type attributes in the feature information, the determination unit 320 may determine a normalization method having the highest priority among the mean normalization method and the feature scaling normalization method.

For a field with count attributes in the feature information, the determination unit 320 may determine a normalization method having the highest priority among the mean normalization method and the feature scaling normalization method.

For a field with rate attributes in the feature information, the determination unit 320 may determine no normalization methods, that is, determine to exclude the field from normalization. Alternatively, the determination unit 320 may determine the standard score normalization method.

For a field indicating the presence or absence of attributes (e.g., the presence or absence of operation results) in the feature information, the determination unit 320 may determine no normalization methods, that is, determine to exclude the field from normalization.

The recommendation unit 330 may recommend the normalization method determined by the determination unit 320.

According to the present disclosure, an optimal normalization method with optimal performance (accuracy) may be recommended/applied for users who create artificial intelligence models for security control based on an UI in an environment provided by the artificial intelligence model platform 100, so that even general users who are not familiar with security control technology may be allowed to create optimal artificial intelligence models for security control.

According to the present disclosure, an artificial intelligence model platform that enables the creation of artificial intelligence models for security control may be implemented as described above. In particular, optimal feature information and optimal normalization methods that are directly related to the performance of an artificial intelligence model may be recommended/applied, so that the artificial intelligence model platform may allow even general users who are not familiar with security control technology to create an optimal artificial intelligence model for security control.

Accordingly, according to the present disclosure, an optimal artificial intelligence model suitable for the purpose and requirements for security control may be flexibly and diversely created and applied, and thus the quality of security control services may be significantly improved. In addition, it may be expected to support the establishment of a breach response system based on artificial intelligence to efficiently analyze signs of large-scale cyberattacks and abnormal behaviors.

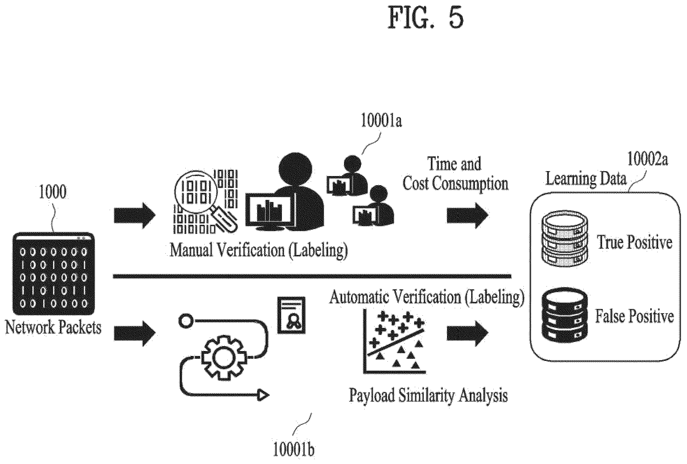

FIG. 5 illustrates a process for generating learning data for security events according to embodiments.

FIG. 5 illustrates a security event learning data generation system according to embodiments. The security event learning data generation system may be implemented, for example, in a learning data generation device or a recording medium configured to drive a security event learning data generation method.

The security event learning data generation process according to the embodiments shown in FIG. 5 may be performed by the management function and artificial intelligence function of FIG. 1, the artificial intelligence model platform 100 of FIG. 2, the feature information recommendation device 200 of FIG. 3, and the normalization recommendation device 300 of FIG. 4.

The security event learning data generation system may collect security events, check the security events, and then verify whether security attacks are detected accurately or incorrectly in the corresponding security events in order to improve the reliability of the security events.

A security event may mean, for example, a problem or phenomenon related to security occurring in computer systems. The security event may be, for example, log data (files) left due to activities related to security in the computer system. The security event may mean, for example, information obtained by organizing log data or intrusion traces generated in the computer system in a time-sequential manner. The security event may be, for example, a bundle of network packets (network packet data) for communication between servers.

The security event may further include information indicating whether a security issue is regarded as an intrusion or non-intrusion. For example, if the computer system regards a security event as an intrusion, it may be called a true positive. If the computer system regards a security event as an intrusion even though the security event is not the intrusion, it may be called a false positive.

The security event learning data generation system may include collecting a security event (10000), verifying the security event (10001a and 10001b), and/or building and generating learning data based on the verified security event (10002).

In step 10000 of collecting the security event, when a security event occurs, data constituting the security event may be collected. The security event may mean, for example, log data that an intruder leaves inside and outside a server when the intruder attacks, temporary data that the intruder leaves, etc.

The security event may mean, for example, a network packet or data related to the network packet.

In steps 10001a and 10001b of verifying the security event, the security event may be verified based on collected security events (e.g., network packets, log data, etc.).

Steps 10001a and 10001b of verifying the security event may be performed according to, for example, two methods. Step 10001 a of verifying the security event may be a manual verification method (manual labeling method).

The manual verification method 10001a refers to a method of discriminating whether a security event is a true positive or a false positive by analyzing and examining security events collected by various experts. The manual verification method 10001a may be referred to as a manual labeling method.

However, since the manual verification method 10001a requires a lot of time and manpower, and verification is made based on subjective criteria, the accuracy may be degraded. Accordingly, the security event learning data generation system according to the embodiments may generate learning data based on an automatic security event verification method 10001b.

In the manual verification method 10001a, verification is determined by many people, so errors may occur during decision making. In addition, since the determination is based on subjective criteria, it may be difficult to ensure the accuracy of data. Accordingly, the automatic security event verification method 10001b may be used based on objective data to verify the security event.

In the automatic security event verification method 10001b, learning data may be verified based on, for example, an artificial intelligence model, a neural network model, and a big data model. For example, the automatic security event verification method 10001b may receive network packets 10000 and automatically verify the network packets by analyzing the similarity between their payloads. In the verification, security events may be quantified to determine whether the security events are true positives or false positives, and then, the security events may be labeled.

In step 10002 of building and generating the learning data, the security events verified by the manual verification method 10001a or the automatic security event verification method 10001b may be classified based on various criteria. For example, in step 10002 of building and generating the learning data, the security events may be stored by classifying the security events into true and false positives.

According to the automatic security event verification method 10001b, whether a new security event is a true positive or false positive may be determined based on the learning data created and built in step 10002 of building and generating the learning data.

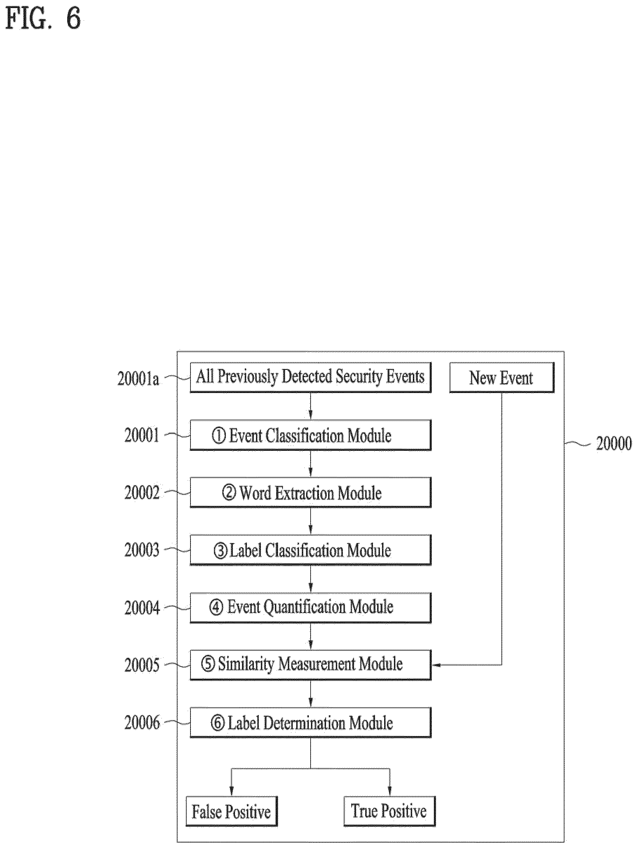

FIG. 6 illustrates an example of a security event learning data generation device according to embodiments.

The security event learning data generation device 20000 may be a device included in a computer system or a device included in a server communicating with the computer system. The security event learning data generation device 20000 shown in FIG. 6 or modules therein may be a single device or chip. However, the security event learning data generation device 20000 or modules therein may be a set of instructions executed in programs.

The security event learning data generation process according to the embodiments shown in FIG. 6 may be performed by the management function and artificial intelligence function of FIG. 1, the artificial intelligence model platform 100 of FIG. 2, the feature information recommendation device 200 of FIG. 3, and the normalization recommendation device 300 of FIG. 4.

The security event learning data generation device 20000 may perform the security event learning data generation process of FIG. 5 and generate learning data based on the automatic security event verification method 10001b described above with reference to FIG. 5.

The security event learning data generation device 20000 may include, for example, a unit for detecting all previously detected security events 20001a, an event classification unit 20001, a word extraction unit 20002, a label classification unit 20003, and an event quantification unit 20004, a similarity measurement unit 20005, and/or a label determination unit 20006.

The unit for detecting all previously detected security events 20001a may receive security events to generate learning data by verifying and classifying the security events into true positives or false positives. The security events mean the security events described above in FIG. 5.

The unit for detecting all previously detected security events 20001a may be included in the embedded computer system and receive, for example, a security event generated in real time or a bundle of security events provided from the server.

The unit for detecting all previously detected security events 20001a may be driven by, for example, the collection function of FIG. 1 or the data collection module 110 of FIG. 2.

The event classification unit 20001 may classify security events based on one or more criteria. For example, the event classification unit 20001 may classify security events by types based on the types or names thereof. For example, the event classification unit 20001 may classify security events by defined attack types and configure groups by attack types. The event classification unit 20001 may configure sub-groups by classifying the groups generated by attack types again according to original detection rules. In other words, the event classification unit 20001 may classify security events and create one or more security event groups.

For example, to implement the event classification unit 20001, the feature extraction module, normalization module, output module, or artificial intelligence module in the collection function of FIG. 1, the feature extraction module 120 or normalization module 130 of FIG. 2, the feature information recommendation device 200 of FIG. 3, and the normalization recommendation device 300 of FIG. 4 may be used independently or in combination.

For example, the event classification unit 20001 may classify security events based on attack patterns. For example, the event classification unit 20001 may classify various security events into a Structured Query Language (SQL) injection group, a network sniffing group, and an Address Resolution Protocol (ARP) spoofing group.

The word extraction unit 20002 may extract meaningful words from security events or security events classified by the event classification unit 20001. Herein, the meaningful word may mean a word or a pattern of words sufficient to determine, for example, the true positive and/or false positive for the security event. For example, if the security event is related to an SQL injection attack, quotation marks (e.g., ' or "), words constituting an instruction (e.g., select, where, union, etc.), or strings constituting an operator (e.g., "=", "!=", etc.) may be the meaningful word. For example, if the security event is related to a sniffing attack, the word extraction unit 20002 may extract words constituting an unnecessary instruction (e.g., tcpdump, dsniff, etc.) that an attacker may use within the server, which may be of concern for sniffing.

The word extraction unit 20002 may perform an operation of searching for a specific character in a security event. The word extraction unit 20002 may extract the meaningful words by considering not only the position of a specific character or word but also the position, frequency, and context where the specific character or word appears. For example, if the security event is related to a sniffing attack, the word extraction unit 20002 may understand "-vv" in "tcpdump-vv" as a parameter showing detailed information provided by a network sniffing tool in context and then extract "-vv" together.

For example, to implement the word extraction unit 20002, a combination of one or more components of the feature extraction module or artificial intelligence module in the collection function of FIG. 1, the feature extraction module 120 or normalization module 130 of FIG. 2, the feature information recommendation device 200 of FIG. 3, and the normalization recommendation device 300 of FIG. 4 may be used independently or in combination.

The label classification unit 20003 may classify security events into true and false positives. The label classification unit 20003 may classify the security events into the true and false positives based on meaningful words extracted by the word extraction unit 20002. Although the label classification unit 20003 may comprehensively analyze all security events and classify all security events into true and false positives, the label classification unit 20003 may classify only security events included in a security event group into true and false positives.

For example, to implement the word extraction unit 20002, a combination of one or more components of the normalization module, the output module, or the artificial intelligence module in the collection function of FIG. 1, the feature extraction module 120 or normalization module 130 of FIG. 2, the feature information recommendation device 200 of FIG. 3, and the normalization recommendation device 300 of FIG. 4 may be used independently or in combination.

The label classification unit 20003 may classify security events into positive and false positives. The label classification unit 20003 may label and store the security events as information (e.g., tag, signaling information, metadata, etc.) indicating whether the security events are the true or false positives.

When security events within a security event group (or all security events) are clearly classified into true and false positives, the label classification unit 20003 may classify the security events. The label classification unit 20003 may withhold the label classification when true positives and positives are not clear.

The event quantification unit 20004 may quantify security events classified by the label classification unit 20003. For example, the event quantification unit 20004 may quantify security events classified as true positives and security events classified as false positives based on a Term Frequency-Inverse Document Frequency (TF-IDF) algorithm. The TF-IDF algorithm may refer to an algorithm for vectorizing security events based on data normalization for calculating a TF-IDF value based on a Term Frequency (TF), which indicates the frequency of occurrence of security events within a learning data set and an Inverse Document Frequency (IDF), which indicates the frequency of occurrence of security events within all data sets. The TF-IDF value may be obtained by multiplying a TF value representing the frequency of occurrence of each security event within each data set and an IDF value representing the frequency of occurrence of each security event within all data sets.

For example, to implement the event quantification unit 20004, a combination of one or more components of the artificial intelligence function of FIG. 1, the feature extraction module 120 or normalization module 130 of FIG. 2, the feature information recommendation device 200 of FIG. 3, and the normalization recommendation device 300 of FIG. 4 may be used independently or in combination.

The similarity measurement unit 20005 may receive, for example, a new security event. The similarity measurement unit 20005 may measure the similarity of the new security event based on values quantified by the event quantification unit 20004. The similarity measurement unit 20005 may determine whether the new security event is similar to the quantified values of security events classified as true positives or the quantified values of security events classified as false positives

For example, to implement the similarity measurement unit 20005, a combination of one or more components of the artificial intelligence function of FIG. 1, the feature extraction module 120 or normalization module 130 of FIG. 2, the feature information recommendation device 200 of FIG. 3, and the normalization recommendation device 300 of FIG. 4 may be used independently or in combination.

The similarity measurement unit 20005 may quantify the new security event. The similarity measurement unit 20005 may quantify the new security event based on, for example, the operation of the word extraction unit 20002 and the operation of the event quantification unit 20004.

The similarity measurement unit 20005 may measure the similarity between the quantified value of the new security event and the quantified values of previously detected security events (all security events) (e.g., the quantified values of a true positive set and the quantified values of a false positive set). To this end, the similarity measurement unit 20005 may use, for example, cosine similarity.

The label determination unit 20006 may determine the label (e.g., true positive or false positive) of the new security event based on the similarity of the new security event measured by the similarity measurement unit 20005. The label determination unit 20006 may label the new security event and store the labeled new security event as learning data.

To implement the label determination unit 20006, a combination of one or more components of the collection function or the artificial intelligence function of FIG. 1 may be used.

Based on the above-described configurations, the security event learning data generation method/device according to embodiments may automatically label data based on similarity between security events and automate a data generation process performed by humans, thereby saving human, physical, and time effort.

Based on the above-described configurations, the security event learning data generation method/device according to the embodiments may mark security events having similar characteristics with the same label, thereby solving data inconsistency, which may be used to verify all security events and build learning data.

Based on the above-described configurations, the security event learning data generation method/device according to the embodiments may reduce the cost of relearning required for artificial intelligence models and also reduce the time required for learning. For example, when the security event learning data generation method/device according to the embodiments additionally receives a new security event, the security event learning data generation method/device may verify and process only the corresponding security event and estimate the similarity with other events, thereby drastically reducing the cost and time for relearning and the process of building a data set. Eventually, time and physical costs may be reduced.

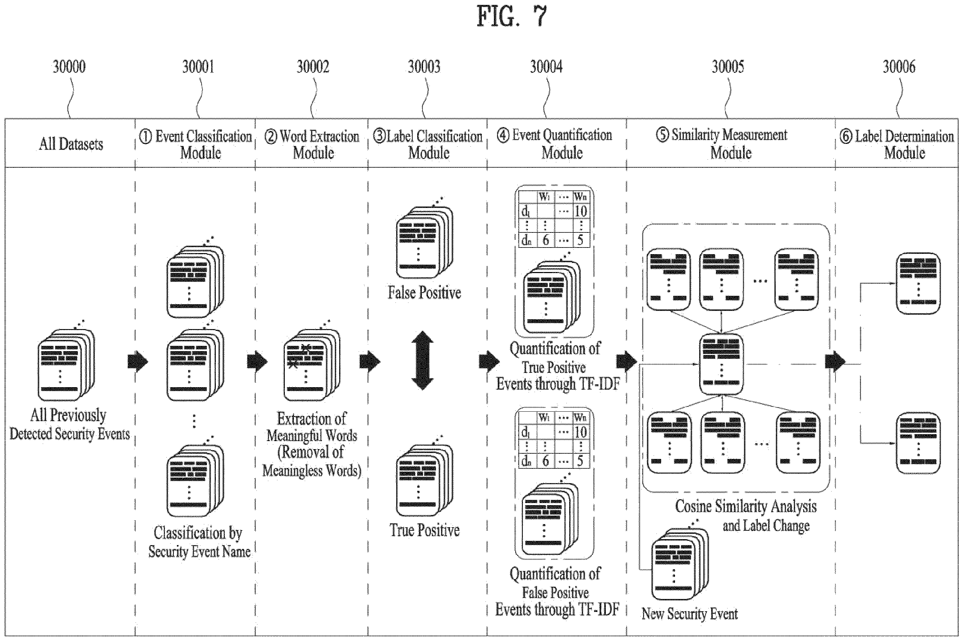

FIG. 7 illustrates examples of the security event learning data generation method and/or security event learning data generation device according to embodiments.

The security event learning data generation method and/or security event learning data generation device may perform the security event learning data generation processes of FIG. 5 and/or FIG. 6. The security event learning data generation method and/or security event learning data generation device may generate learning data based on the automatic security event verification method 10001b described in FIG. 5 and/or 6 .

For example, the security event learning data generation method includes the following steps: configuring all data sets (30000); classifying events (30001); extracting words (30002); classifying labels (30003); quantifying events (30004); measuring similarity (30005); and/or determining labels (30006).

In step 30000 of configuring all data sets, previously detected security events may be received. In step 30000 of configuring all data sets, the operation of the unit for detecting all previously detected security events 20001a may be performed. Step 30000 of configuring all data sets may be performed by, for example, the collection function and/or management function of FIG. 1 or the data collection module 110 of FIG. 2.

In step 30001 of classifying the events, all received security events may be classified into one or more security event groups. In step 30001 of classifying the events, the operation of the event classification module 20001 of FIG. 6 may be performed. For example, to perform step 30001 of classifying the events, the feature extraction module, normalization module, output module, or artificial intelligence module in the collection function of FIG. 1, the feature extraction module 120 or normalization module 130 of FIG. 2, the feature information recommendation device 200 of FIG. 3, and the normalization recommendation device 300 of FIG. 4 may be used independently or in combination.

In step 30002 of extracting the words, meaningful words may be extracted from all security events or security events classified in step 30001 of classifying the events. In step 30002 of extracting the words, the operation of the word extraction unit 20002 of FIG. 6 may be performed. For example, to perform step 30002 of extracting the words, the feature extraction module 120 or normalization module 130 of FIG. 2, the feature information recommendation device 200 of FIG. 3, and the normalization recommendation device 300 of FIG. 4 may be used independently or in combination.

In step 30003 of classifying the labels, all security events or security events classified based on meaningful words extracted in step 30002 of extracting the words may be labeled as true positives or false positives. In step 30003 of classifying the labels, the operation of the label classification unit 20003 of FIG. 6 may be performed. For example, to perform step 30003 of classifying the labels, a combination of one or more components of the normalization module, the output module, or the artificial intelligence module in the collection function of FIG. 1, the feature extraction module 120 or normalization module 130 of FIG. 2, the feature information recommendation device 200 of FIG. 3, and the normalization recommendation device 300 of FIG. 4 may be used independently or in combination.

In step 30004 of quantifying the events, security events labeled as true positives and security events labeled as false positives in step 30003 of classifying the labels may be quantified. In step 30004 of quantifying the events, the operation of the event quantification unit 20004 of FIG. 6 may be performed. For example, to perform step 30004 of quantifying the events, a combination of one or more components in the artificial intelligence function of FIG. 1, the feature extraction module 120 or normalization module 130 of FIG. 2, the feature information recommendation device 200 of FIG. 3, and the normalization recommendation device 300 of FIG. 4 may be used independently or in combination.

In step 30005 of measuring the similarity, a new security event may be received, and whether the new security event is a true or false positive may be determined based on values quantified in step 30004 of quantifying the events. To determine whether the new security event is the true or false positive, the similarity with the values quantified in step 30004 of quantifying the events may be used. In step 30005 of measuring the similarity, the operation of the similarity measurement unit 20005 of FIG. 6 may be performed. For example, to perform step 30005 of measuring the similarity, a combination of one or more components in the artificial intelligence function of FIG. 1, the feature extraction module 120 or normalization module 130 of FIG. 2, the feature information recommendation device 200 of FIG. 3, and the normalization recommendation device 300 of FIG. 4 may be used independently or in combination.

In step 30006 of determining the labels, a new security event determined to be a true or false positive in step 30005 of measuring the similarity may be labeled as the true or false positive. In step 30006 of determining the labels, the operation of the label determination unit 20006 of FIG. 6 may be performed. For example, to perform step 30006 of determining the labels, a combination of one or more components of the collection function or the artificial intelligence function of FIG. 1 may be used.

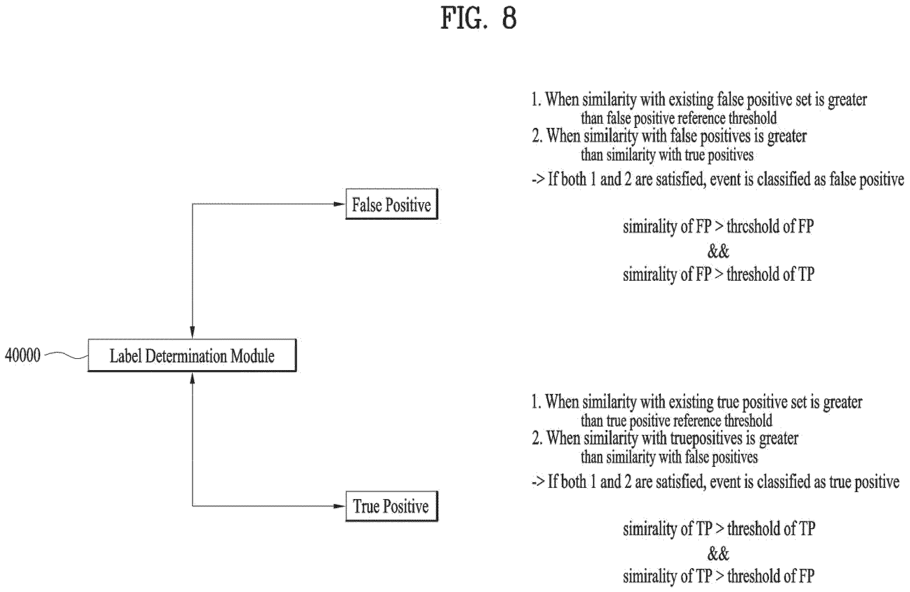

FIG. 8 illustrates exemplary operations of a label determination unit according to embodiments.

A label determination unit 40000 shown in FIG. 8 may be part or all of the label determination unit 20006 or the event quantification unit 20005 shown in FIG. 6. The label determining unit 40000 shown in FIG. 8 may perform part or all of step 30006 of determining the labels or step 30005 of measuring the similarity shown in FIG. 7.

To implement the label determination unit 40000, a combination of one or more components of the collection function or the artificial intelligence function of FIG. 1 may be used.

The label determination unit 40000 may determine and label whether a new security event detected in the computer system is a true or false positive based on similarity and thresholds. The similarity may mean a value quantified by the event quantification unit 20005 of FIG. 6 or a value measured in step 30005 of measuring the similarity of FIG. 7.

The label determination unit 40000 may label the new security event based on conditions for classifying the new security event as a false positive and/or conditions for classifying the new security event as a true positive.

For example, the similarity of the new security event may include: similarity with true positives, that is, similarity between the new security event and security events in a true positive group; and/or similarity with false positives, that is, similarity between the new security event and security events in a false positive group.

For example, the conditions for classifying a security event as a false positive may include: 1) a case in which similarity with an existing false positive set is greater than a false positive reference threshold; and 2) a case in which similarity with false positives is greater than the similarity with true positives.

For example, the conditions for classifying a security event as a true positive may include: 1) a case in which similarity with an existing true positive set is greater than a true positive reference threshold; and 2) a case in which similarity with true positives is greater than the similarity with false positives.

Similarity with false positives may also be referred to as similarity with an existing false positive set. The similarity with false positives may mean, for example, similarity with security events classified as false positives, which are quantified based on previously detected security events. The false positive reference threshold may mean, for example, a threshold determined or configured by the system or user.

Similarity with true positives may also be referred to as similarity with an existing true positive set. The similarity with true positives may mean, for example, similarity with security events classified as true positives, which are quantified based on previously detected security events. The true positive reference threshold may mean, for example, a threshold determined or configured by the system or user.

The similarity with false positives may mean, for example, similarity with a false positive set where a security event that is not an intrusion is determined as the intrusion (similarity of FP). The similarity with true positives may mean, for example, similarity with a true positive set where a security event that is an intrusion is determined as the intrusion (similarity of TP).

Based on the above-described configurations, the security event learning data generation method/device according to the embodiments may automatically build learning data with no separate environment configurations and labeling personnel, thereby drastically reducing the process for building a data set. Eventually, time and physical costs may be reduced.

Based on the above-described configurations, the security event learning data generation method/device according to the embodiments may generate high-precision learning data that influences the performance of artificial intelligence, thereby generating large-capacity/high-precision learning data with a very small amount of pre-detection (labeling) data. Therefore, the security event learning data generation method/device according to the embodiments may secure a high-level learning data set without manual verification.

In the security event learning data generation method/device according to the embodiments, a data-based data building method for making objective determinations based on data independently of human decision-making and bias is used, thereby securing consistency based on to the characteristics of a data set.

The security event learning data generation method/device according to the embodiments may enable both real-time verification and post-verification of data quality by building learning data.

In the prior art, learning and detection are allowed only when sufficient data sets for detecting new and variant attacks are secured. However, the security event learning data generation method/device according to the embodiments may effectively detect new and variant attacks or build data sets for detecting the new and variant attacks.

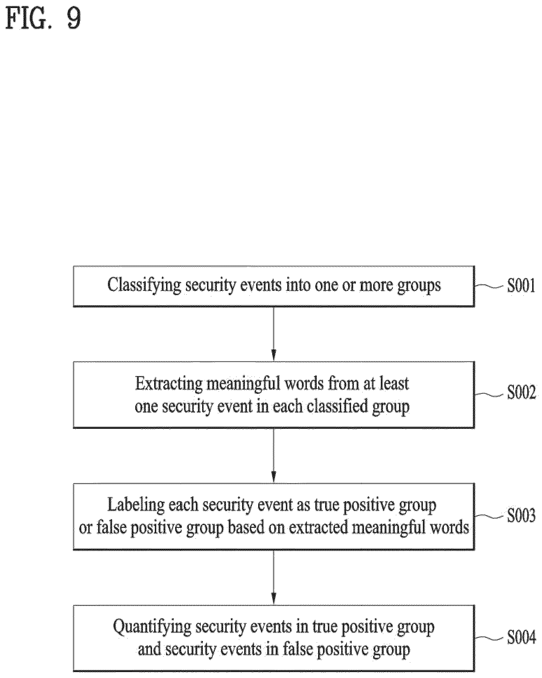

FIG. 9 is a flowchart illustrating the security event learning data generation method according to the embodiments.

The security event learning data generation method according to the embodiments may include: classifying security events into one or more groups (S001); extracting meaningful words from at least one security event in each classified group (S002); labeling each security event as a true positive group or a false positive group based on the extracted meaningful words (S003); and/or quantifying security events in the true positive group and security events in the false positive group (S004).

In step S001 of classifying the security events into the one or more groups, previously detected security events may be classified into security event groups. For example, this step may be performed by the event classification unit 20001 of FIG. 6 or correspond to step 30001 of classifying the events of FIG. 7.

In step S002 of extracting the meaningful words from the at least one security event in each classified group, meaningful words may be extracted from security events. This step may be performed by the word extraction unit 20002 of FIG. 6 or correspond to step 30002 of extracting the words of FIG. 7.

In step S003 for labeling, each security event may be classified into the true positive group or the false positive group based on meaningful words extracted in step S002. Step S003 for labeling may be performed by the label classification unit 20003 of FIG. 6 and correspond to step 30003 of classifying the labels.

In step S004 of quantifying the security events in the true positive group and the security events in the false positive group, labeled security events may be quantified in order to verify similarity between new security events and security events labeled in step S003 for labeling. In step S004 of quantifying the security events in the true positive group and the security events in the false positive group, the operation of the event quantification unit 20004 of FIG. 6 and step 30004 of quantifying the events of FIG. 7 may be performed.

The security event learning data generation method according to the embodiments may include measuring similarity of a new security event; and/or labeling the new security event as the true positive group or the false positive group based on the measured similarity.

In the step of measuring the similarity of the new security event, the similarity of the new security event may be measured based on similarity of security events in the true positive group and/or similarity of security events in the false positive group, which are quantified in step 30004 of quantifying the events.

For example, the similarity of the new security event may include similarity between the new security event and the security events in the true positive group and/or similarity between the new security event and the security events in the false positive group.

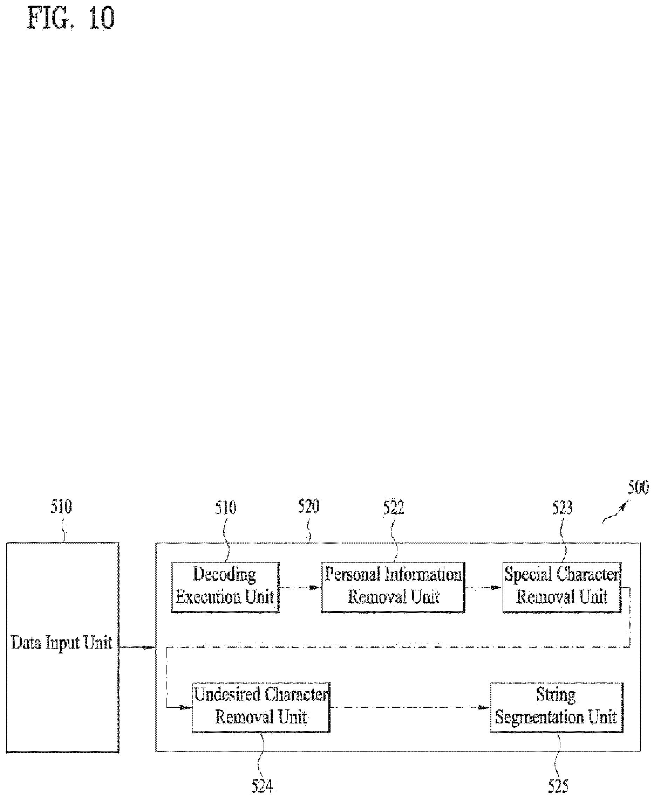

FIG. 10 is a block diagram of a security data pre-processing device according to embodiments.

FIG. 10 is the block diagram of the security data pre-processing device according to the embodiments. The security data pre-processing device according to the embodiments may receive security data (e.g., security events of FIG. 1) and perform pre-processing on the received security data. The security data pre-processing device 500 according to the embodiments may perform the same or similar operations to those of the data collection module 110 and feature extraction module 120 of FIG. 2 described above. The security data pre-processing device according to the embodiments may include a data input unit 510 and/or a data pre-processing unit 520.

The data input unit according to embodiments may receive security data. The data input unit according to the embodiments may perform the same or similar operations as those of the data collection module 110 of FIG. 2. Security data input to the data input unit according to the embodiments may be the same as or similar to security events of FIG. 2. The security data according to embodiments may be data obtained by combining machine language data and natural language data. The security data according to the embodiments may be network payload data (or payload data). That is, the security data according to the embodiments may have a different payload configuration method depending on which protocol is used to generate the security data. In addition, the security data according to the embodiments may have a key-value data structure. Therefore, when the combination of machine language data and natural language data varies and when the order of keys and values or the relationship between values, which depend on keys, varies, the original meaning of the security data according to the embodiments may vary. Accordingly, a pre-processing process (e.g., pre-processing described in FIG. 2) for using the security data according to the embodiments as machine learning data (e.g., learning data described in FIGS. 2 and 4) to create artificial intelligence models (e.g., artificial intelligence models described in FIGS. 1 to 4) may be based on the above-described characteristics of the security data. Therefore, a pre-processing unit according to embodiments may perform the pre-processing process based on the characteristics of security data.

The pre-processing unit according to the embodiments may perform a pre-processing process on input security data. The pre-processing unit according to the embodiments may perform the same or similar operations as those of the feature extraction module 120 of FIG. 2. The pre-processing process performed by the pre-processing unit according to the embodiments may the same as or similar to the pre-processing process described in FIG. 2. The pre-processing unit according to the embodiments may be included in the feature extraction module 120 of FIG. 2. The pre-processing unit according to the embodiments may include a decoding execution unit 521, a personal information removal unit 522, a special character removal unit 523, an undesired character removal unit 524, and/or a string segmentation unit 525. The pre-processing unit according to the embodiments may further include one or more elements to perform the pre-processing process.

The decoding execution unit according to embodiments may perform decoding on input security data. The decoding execution unit according to the embodiments may perform decoding depending on how the security data is encoded. For example, the decoding execution unit may convert a hexadecimal encoded string into an ASCII string.

The personal information removal unit according to embodiments may remove personal information from decoded security data. Personal information according to embodiments may be data that does not belong to learning data for generation of artificial intelligence models. That is, the personal information may be information about system administrators or general users described in FIGS. 1 to 4. For example, the personal information may include IP addresses, resident registration numbers, phone numbers, passport numbers, and the like. The personal information removal unit according to the embodiments may identify and remove personal information included in security data based on patterns stored according to regular expressions. The regular expressions according to embodiments may be predetermined by the system administrator or general user. The personal information removal unit according to the embodiments may generate optimal learning data by removing unnecessary data when an artificial intelligence model is created and may also maintain security by removing the personal information on the user or administrator.

The special character removal unit according to embodiments may remove special characters from security data from which personal information is removed. That is, the process in which the special character removal unit according to the embodiments removes the special characters may be performed after the process in which the personal information removal unit removes personal information. If the special character removal process by the special character removal unit according to the embodiments is performed before the personal information removal process by the personal information removal unit, there may be a problem that personal information is not removed. For example, if the special character "-(bar)" is first removed from a resident registration number corresponding to personal information, the personal information removal unit may not identify the resident registration number. The special character removal unit according to the embodiments may be located after the personal information removal unit to solve the problem. The special characters according to embodiments may be data that does not belong to learning data for generation of artificial intelligence models. In other words, the special character removal unit according to the embodiments may remove special characters except for special characters required for learning data for generation of artificial intelligence models. For example, the special character removal unit may remove special characters except for the following: "@ (at)", "_ (under bar)", ". (dot)", and "/ (slash)". The special character removal unit according to the embodiments may identify and remove special characters included in security data based on patterns stored according to regular expressions. The regular expressions according to embodiments may be predetermined by the system administrator or general user. The special character removal unit according to the embodiments may generate optimal learning data by removing unnecessary data, which does not belong to learning data for generation of artificial intelligence models.

The undesired character removal unit according to embodiments may remove undesired characters from security data from which special characters are removed. The undesired character removal unit according to the embodiments may remove data that is not removed in the above-described personal information removal process and special character removal process among data not belonging to learning data for generation of artificial intelligence models. That is, the undesired character removal process by the undesired character removal unit according to the embodiments may be performed after the above-described personal information removal process and special character removal process. For example, the undesired character removal unit may remove data consisting only of special characters, data consisting only of one number and one character, data consisting only of one special character and other characters, and the like. The undesired character removal unit according to the embodiments may identify and remove undesired characters included in security data based on patterns stored according to regular expressions. The regular expressions according to embodiments may be predetermined by the system administrator or general user. The undesired character removal unit according to the embodiments may generate optimal learning data by removing unnecessary data that does not belong to learning data for generation of artificial intelligence models.

The string segmentation unit according to embodiments may perform string segmentation on security data from which undesired characters are removed. The string segmentation process according to embodiments may be a process for performing tokenization on a string based on the character of tab (e.g., '\t', '\n', '\r', '\f', '\v', or ' '). A string (or data) over a predetermined length may not be used as learning data for generation of artificial intelligence models. Therefore, for security data from which personal information, special characters, and undesired characters are removed, the string segmentation unit according to the embodiments may generate learning data for generation of artificial intelligence models by segmenting (or tokenizing) a string to have the predetermined length or less.

The string segmentation process by the string segmentation unit according to the embodiments may be performed after the above-described personal information removal process, special character removal process, and undesired character removal process. If the string segmentation process by the string segmentation unit according to the embodiments is performed before the above-described personal information removal process, special character removal process, and undesired character removal process, data output from the pre-processing unit according to the embodiments may vary. For example, when the above-described personal information removal process, special character removal process, and undesired character removal process are performed for data of "010-0000-0000/desk/1r40", the following results may be obtained.

Removal of personal information: /desk/1r40
Removal of special characters: desk 1r40
Removal of undesired characters: desk

For example, for the data of "010-0000-0000/desk/1r40", when the string segmentation process (e.g., 10 units) is performed before the above-described personal information removal process, special character removal process, and undesired character removal process, the following results may be obtained:

String segmentation: 010-0000-0 000/desk/1 r40
Removal of personal information: 010-0000-0 000/desk/1 r40
Removal of special characters: 010-0000-0 000/desk/1
Removal of undesired characters: 010-0000-0 000 desk 1

That is, if the string segmentation process by the string segmentation unit according to the embodiments is performed before the above-described personal information removal process, special character removal process, and undesired character removal process, there may be a problem that the pre-processing unit outputs data not belonging to learning data for generation of artificial intelligence models. The pre-processing unit according to the embodiments may solve the above problem by performing the string segmentation process last.

The pre-processing unit according to the embodiments may perform the pre-processing process for generating optimal learning data for generation of artificial intelligence models through the above-described decoding process, personal information removal process, special character removal process, undesired character removal process, and/or string segmentation process.

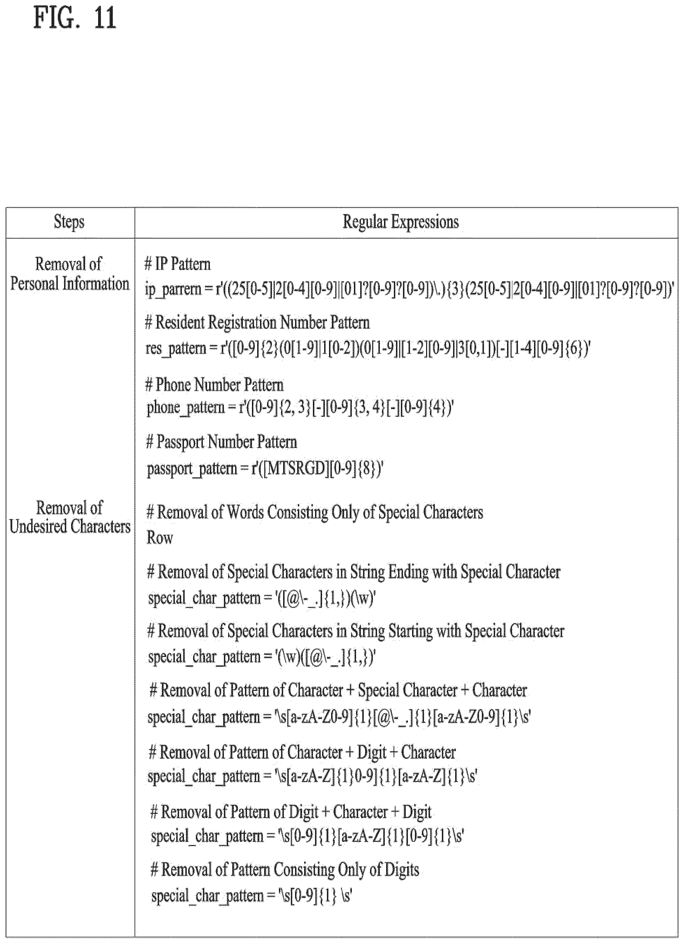

FIG. 11 illustrates regular expressions according to embodiments.

FIG. 11 is a view showing exemplary regular expressions (i.e., regular expressions described in FIG. 10) used by the pre-processing unit. The personal information removal process, special character removal process, and undesired character removal process described above in FIG. 10 may be performed according to regular expressions predetermined by the system administrator or general user.

The personal information removal unit according to the embodiments (i.e., personal information removal unit 522 in FIG. 10) may perform the personal information removal process according to the predetermined regular expressions. The regular expressions for the personal information removal unit according to embodiments may include an IP pattern, a resident registration number pattern, a phone number pattern, and/or a passport number pattern.

The IP address according to embodiments may be in the form of IPversion4 (IPv4). The IP address according to the embodiments may have a pattern in which a three-digit number is expressed in four words, such as any one of 000.000.000.000 to 255.255.255.255. That is, the pattern representing the IP address according to the embodiments may be ((25[0-15]|2[0-4][0-9]|[01]?[0-9]?[0-9])\. ) {3} (25[0-5]|2[0-4][0-9]|[01]?[0-9]?[0-9]). Accordingly, the personal information removal unit according to the embodiments may identify and delete IP addresses included in security data (security data described in FIG. 5) according to the regular expressions having ip_pattern = r'((25[0-5]|2[0-4][0-9]|[01]?[0-9]?[0-9])\.){3}(25[0-5]|2[0-4][0-9]|[01]?[0-9]?[0-9])'.

The resident registration number according to embodiments may have a pattern represented by a total of 13 digits having 6 digits before the character of "- (bar)" and having 7 digits after the character of "- (bar)". That is, the pattern representing the resident registration number according to the embodiments may be ([0-9]{2}(0[1-9]|1[0-2])(0[1-9]|[1-2][0- 9]13[0,1])[-][1-4][0-9]{6}). Accordingly, the personal information removal unit according to the embodiments may identify and delete resident registration numbers included in security data (security data described in FIG. 5) according to the regular expressions having res_pattern = r'([0-9]{2}(0[1-9]|1[0-2])(0[1-9]|[1-2 ][0-9]|3[0,1])[-][1-4][0-9]{6})'.

The phone number according to embodiments may include an area code expressed as two or three digits; a front number expressed as three or four digits; and a last number expressed as four digits. The area code, front number, and last number may be separated by "- (bar)". That is, the pattern representing the phone number according to the embodiments may be ([0-9]{2,3}[-][0-9]{3, 4}[-][0-9]{4}). Accordingly, the personal information removal unit according to embodiments may identify and delete phone numbers included in security data according to the regular expressions having phone_pattern = r'([0-9]{2, 3}[-][0-9]{3, 4}[-][0-9]{4})'.

The passport number according to embodiments may have a pattern represented by one of the following alphabets: M, T, S, R, G, and D and eight digits. That is, the pattern representing the passport number according to the embodiments may be ([MTSRGD][0-9] {8}). Accordingly, the personal information removal unit according to the embodiments may identify and delete passport numbers included in security data (security data described in FIG. 5) according to the regular expressions having passport_pattern = r'([MTSRGD][0-9]{8})'.

The personal information removal process performed by the personal information removal unit according to the embodiments based on the predetermined regular expressions may not be limited to the above-described embodiments.

The special character removal unit according to the embodiments (the special character removal unit 523 of FIG. 10) may perform the special character removal process according to the predetermined regular expressions (not shown in this drawing). As described above in FIG. 10, the special character removal unit may remove special characters except for special characters (for example, "@ (at)", "_(under bar)", ". (dot)", and "/ (slash)") required for learning data for generation of artificial intelligence models.

The undesired character removal unit according to the embodiments (the undesired character removal unit 524 of FIG. 10) may perform the undesired character removal process according to the predetermined regular expressions. The regular expressions for undesired characters according to embodiments may include: a pattern of strings consisting only of special characters; a pattern of special characters in a string ending with a special character; a pattern of special characters in a string starting with a special character; a pattern of three-character strings consisting of one character, one special character, and one character; a pattern of three-character strings consisting of one digit, one character and one digit; and a pattern of strings consisting of only one digit.

The undesired character removal unit according to the embodiments may identify and remove a string consisting only of special characters (e.g., "@", "\", "-", "_", and ".") included in security data according to the regular expressions with row = re.sub('\s[@\-_.]{2,}\s', '', row).

The undesired character removal unit according to the embodiments may identify and remove special characters from a string ending with a special character included in security data according to the regular expressions with special_char_pattern = '([@\-_.]{1,})(\w)'.

The undesired character removal unit according to the embodiments may identify and remove special characters from a string starting with a special character included in security data according to the regular expressions with special_char_pattern = '(\w)([@\-_.]{1,})'.

The undesired character removal unit according to the embodiments may identify and remove a three-character string consisting of one character, one special character, and one character included in security data according to the regular expressions with special_char_pattern = '\s[a-zA-Z]{1}0-9]{1}[a-zA-Z]{1}\s'.

The undesired character removal unit according to the embodiments may identify and remove a three-character string consisting of one digit, one character, and one digit included in security data according to the regular expressions with special_char_pattern = '\s[0-9]{1}[a-zA-Z]{1}[0-9]{1}\s'.

The undesired character removal unit according to the embodiments may identify and remove a string consisting of only one digit included in security data according to the regular expressions with special_char_pattern = '\s[0-9]{1,} \s'.

The undesired character removal process according to the predetermined regular expressions, which is performed by the undesired character removal unit according to the embodiments, may not be limited to the above-described embodiments.

Therefore, the personal information removal unit, special character removal unit, and undesired character removal unit of the pre-processing unit according to the embodiments may efficiently perform the removal process according to the predetermined regular expressions.

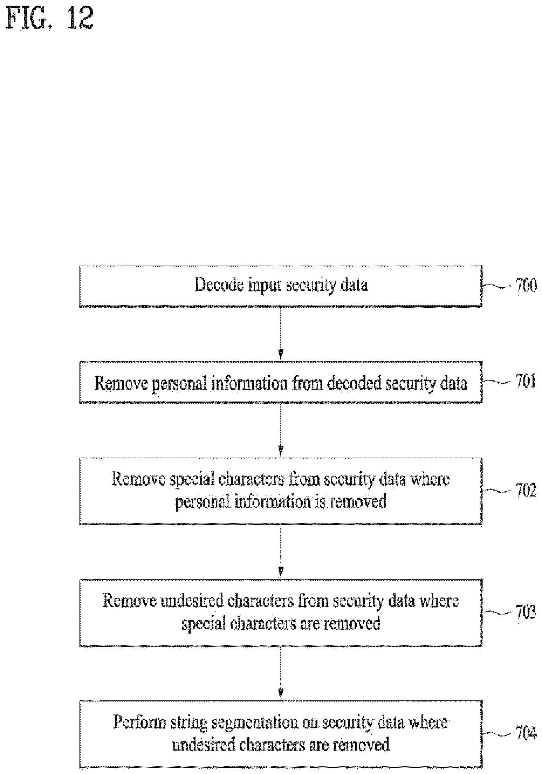

FIG. 12 is a flowchart illustrating a pre-processing process by a pre-processing unit according to embodiments.

The pre-processing unit according to the embodiments (e.g., pre-processing unit 520 of FIG. 10) may perform the pre-processing process. FIG. 10 shows the flowchart of the pre-processing process by the pre-processing unit according to the embodiments.

A data input unit according to embodiment may transmit input security data to a decoding unit. The decoding unit according to embodiments may decode the input security data (700). The details of the data input unit and decoding unit according to the embodiments are the same as those of the data input unit and decoding unit of FIG. 5.

A personal information removal unit according to embodiments may remove personal information from the decoded security data (701). The details of the personal information removal unit according to the embodiments are the same as those described above with reference to FIGS. 10 and 11.

A special character removal unit according to embodiments may remove special characters from the security data where the personal information is removed (702). The details of the special character removal unit according to the embodiments are the same as those described above with reference to FIGS. 10 and 11.

An undesired character removal unit according to embodiments may remove undesired characters from the security data where the special characters are removed (703). The details of the undesired character removal unit according to the embodiments are the same as those described above with reference to FIGS. 10 and 11.

A string segmentation unit according to embodiments may perform string segmentation on the security data where the undesired characters are removed (704). The details of the string segmentation unit according to the embodiments are the same as those described above in FIG. 10. As described above in FIG. 10, the pre-processing unit according to the embodiments may sequentially performs steps 701 to 704.

Security data according to embodiments may be obtained by machine language data and natural language data, which may correspond to payload data. The details of the security data according to embodiments are the same as those described above with reference to FIG. 10.

The above-described processes: personal information removal, special character removal, and undesired character removal may be performed according to a predetermined method (e.g., regular expressions described in FIG. 11). The details of the personal information removal process, special character removal process, and undesired character removal process according to the embodiments may be performed according to the predetermined regular expressions as described above with reference to FIG. 11.

The pre-processing unit according to the embodiments may perform the pre-processing process for input security data to generate optimal learning data for generating an artificial intelligence model.

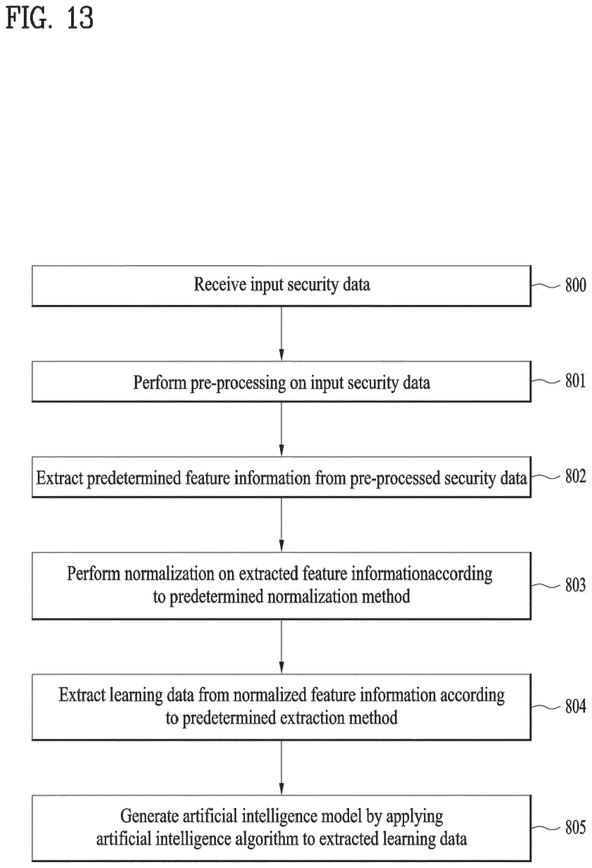

FIG. 13 is a flowchart of a process for operating an artificial intelligence platform for security control according to embodiments.

The artificial intelligence platform according to the embodiments (e.g., platform described in FIGS. 1 to 4) may perform the process for operating the artificial intelligence platform for security control. FIG. 13 shows the flowchart of the process for operating the artificial intelligence platform for security control according to the embodiments.

A data input unit (e.g., data input unit of FIG. 10 or data collection module of FIG. 2) according to embodiments may receive input security data (800). The details of the data input unit according to the embodiments are the same as those described above with reference to FIGS. 1 to 4 and FIG. 10.

A pre-processing unit according to embodiments may perform pre-processing on the input security data (801). The details of the pre-processing unit according to the embodiments are the same as those described in FIG. 10. The details of the pre-processing process performed by the pre-processing unit according to the embodiments are the same as those described in FIGS. 10 to 12.

A feature extraction module according to embodiments may extract predetermined feature information from the pre-processed security data (802). The details of the feature extraction process performed by the feature extraction module according to the embodiments are the same as those described in FIGS. 1 to 4. The pre-processing unit according to the embodiments may or may not be included in the feature extraction module according to the embodiments.

A normalization module according to embodiments may perform normalization on the extracted feature information according to a predetermined normalization method (803). The details of the normalization process performed by the normalization module according to embodiments are the same as those described in FIGS. 1 to 4.

A data output module according to embodiments may extract learning data from the normalized feature information according to a predetermined extraction method (804). The details of the learning data extraction process performed by the data output module according to the embodiments are the same as those described in FIGS. 1 to 4.

A model generation module according to embodiments may generate an artificial intelligence model by applying an artificial intelligence algorithm to the extracted learning data (805). The details of the artificial intelligence model generation process performed by the model generation module according to the embodiments are the same as those described in FIGS. 1 to 4.

Each of the above-described components may be implemented with different hardware (e.g., chip, hardware circuit, communicable device, etc.), or the components may be implemented with one piece of hardware. Each of the above-described components may be implemented with different software or application programming interface (API). In addition, at least one of the above-described components may be implemented with one or more processors capable of executing software or programs.

The terms "first" and "second" used in the embodiments may be used to describe various components according to the embodiments. However, the various components according to the embodiments are not limited by the above terms because the terms are only used to distinguish one component from another. For example, a first learning model may be referred to as a second learning model, and the second learning model may also be referred to as the first learning model. Such changes should not be construed as departing from the scope of the various embodiments described above. Although both the first and second learning models are learning models, the first and second learning models are not interpreted as the same virtual object unless the context clearly indicates.

Executable instructions for performing technical tasks according to embodiments may be stored in a non-transitory computer-readable medium (CRM) or other computer program products configured for execution by one or more processors. Alternatively, the instructions may be stored in a transitory CRM or other computer program products configured for execution by one or more processors. In addition, a memory according to embodiments may be used as a concept including a non-volatile memory, a flash memory, a programmable read-only memory (PROM), and the like as well as a volatile memory (e.g., random-access memory (RAM)).

Although each of the embodiments described above in FIGS. 1 to 13 may be performed independently, the embodiments may be combined with the operations described in each drawing to implement a new embodiment. The embodiments described in FIGS. 1 to 4 may also be implemented in the form of a recording medium (e.g., computer-executable recording medium or computer-readable medium) having computer-executable programs.

A monitoring data processing system according to embodiments may be operated by components included in a monitoring data processing device or monitoring data processing unit. The components according to embodiments may be implemented with hardware, software, or a combination thereof. Each of the components according to the embodiments may be implemented with at least one processor for executing one or more programs. Each of the one or more programs may include instructions for performing operations that the program is intended to achieve. A storage unit according to embodiments may be a concept including a volatile memory (e.g., RAM, etc.), a non-volatile memory, and the like.

## MODE FOR CARRYING OUT THE DISCLOSURE

The mode for carrying out the disclosure has been described along with the best mode for carrying out the disclosure.

## INDUSTRIAL APPLICABILITY

The embodiments disclosed herein may have industrial applicability because the embodiments are capable of being implemented with a security data processing device, security data processing method, and computer-readable storage medium for storing a program for processing security data, which may be repeatedly implemented.

**Claims**

1. A method of processing security data, the method comprising:

   classifying security events into one or more groups;
   extracting meaningful words from at least one security event in each of the classified groups;
   labeling each security event as a true positive group or a false positive group based on the extracted meaningful words; and
   quantifying security events in the true positive group and security events in the false positive group.

2. The method of claim 1, further comprising:

   measuring a similarity of a new security event based on the quantified security events in the true positive group and the quantified security events in the false positive group; and
   labeling the new security event as the true positive group or the false positive group based on the measured similarity.

3. The method of claim 2, wherein the similarity of the new security event comprises a first similarity and a second similarity,

   wherein the first similarity is a similarity between the new security event and the security events in the true positive group, and
   wherein the second similarity is a similarity between the new security event and the security events in the false positive group.

4. A device configured to process security data, the device comprising:

   an event classification unit configured to classify security events into one or more groups;
   a word extraction unit configured to extract meaningful words from at least one security event in each of the classified groups;
   a label classification unit configured to label each security event as a true positive group or a false positive group based on the extracted meaningful words; and
   an event quantification unit configured to quantify security events in the true positive group and security events in the false positive group.

5. The device of claim 4, further comprising:

   a similarity measurement unit configured to measure a similarity of a new security event based on the quantified security events in the true positive group and the quantified security events in the false positive group; and
   a label determination unit configured to label the new security event as the true positive group or the false positive group based on the measured similarity.

6. The device of claim 5, wherein the similarity of the new security event comprises a first similarity and a second similarity,

   wherein the first similarity is a similarity between the new security event and the security events in the true positive group, and
   wherein the second similarity is a similarity between the new security event and the security events in the false positive group.

7. A computer-readable storage medium configured to store a program for processing security data and performing operations comprising:

   classifying security events into one or more groups;

extracting meaningful words from at least one security event in each of the classified groups;
labeling each security event as a true positive group or a false positive group based on the extracted meaningful words; and
quantifying security events in the true positive group and security events in the false positive group.

8. A device configured to process security data, the device comprising:

a data input unit configured to receive input security data; and
a pre-processing unit configured to perform pre-processing on the input security data,
wherein the pre-processing unit comprises:

a decoding unit configured to decode the input security data;
a personal information removal unit configured to remove personal information from the decoded security data;
a special character removal unit configured to remove special characters from the security data from which the personal information is removed;
an undesired character removal unit configured to remove undesired characters from the security data from which the special characters are removed; and
a string segmentation unit configured to perform string segmentation on the security data from which the undesired characters are removed.

9. The device of claim 8, wherein the security data is obtained by combining machine language data and natural language data, and
wherein the security data has a key-value data structure.

10. The device of claim 9, wherein each of the personal information removal, the special character removal, and the undesired character removal is performed according to a predetermined method.

11. A method of processing security data, the method comprising:

receiving input security data; and
performing pre-processing on the input security data,
wherein the pre-processing comprises:

decoding the input security data;
removing personal information from the decoded security data;
removing special characters from the security data from which the personal information is removed;
removing undesired characters from the security data from which the special characters are removed; and
performing string segmentation on the security data from which the undesired characters are removed.

12. The method of claim 11, wherein the security data is obtained by combining machine language data and natural language data, and
wherein the security data has a key-value data structure.

13. The method of claim 12, wherein each of the personal information removal, the special character removal, and the undesired character removal is performed according to a predetermined method.

14. A computer-readable storage medium configured to store a program for processing security data and performing operations comprising:

receiving input security data; and
performing pre-processing on the input security data,
wherein the pre-processing comprises:

decoding the input security data;
removing personal information from the decoded security data;
removing special characters from the security data from which the personal information is removed;
removing undesired characters from the security data from which the special characters are removed; and

performing string segmentation on the security data from which the undesired characters are removed.

# FIG. 1

EP 4 254 237 A1

System Manager        User

User Interface

**Collection**

| Collection | Feature Extraction |
| Normalization | Output |

**Artificial Intelligence**

| Model Creation | Performance Management |
| History Management | |

**Management**

| Configuration | User Management |

Search Engine (Data Storage)

File Storage

User Information/Configuration Information Storage

Integrated Big Data Storage

DB · · · DB

# FIG. 2

100

| | |
|---|---|
| 110 — Data Collection Module | Model Generation Module — 150 |
| 120 — Feature Extraction Module | Performance Management Module — 160 |
| 130 — Normalization Module | UI Module — 170 |
| 140 — Data Output Module | |

FIG. 3

200 (120,160)

| | |
|---|---|
| Model Performance Checking Unit | 210 |
| Combination Performance Checking Unit | 220 |
| Recommendation Unit | 230 |

FIG. 4

300 (130)

| |
|---|
| Attribute Checking Unit ~310 |
| Determination Unit ~320 |
| Recommendation Unit ~330 |

# FIG. 5

# FIG. 6

20001a — | All Previously Detected Security Events |     | New Event |

20001 — ① Event Classification Module

20002 — ② Word Extraction Module

20003 — ③ Label Classification Module

20004 — ④ Event Quantification Module

20005 — ⑤ Similarity Measurement Module

20006 — ⑥ Label Determination Module

20000

False Positive     True Positive

# FIG. 7

| 30000 | 30001 | 30002 | 30003 | 30004 | 30005 | 30006 |
|---|---|---|---|---|---|---|

| All Datasets | ① Event Classification Module | ② Word Extraction Module | ③ Label Classification Module | ④ Event Quantification Module | ⑤ Similarity Measurement Module | ⑥ Label Determination Module |

All Previously Detected Security Events

Classification by Security Event Name

Extraction of Meaningful Words (Removal of Meaningless Words)

False Positive

True Positive

Quantification of True Positive Events through TF-IDF

Quantification of False Positive Events through TF-IDF

Cosine Similarity Analysis and Label Change

New Security Event

EP 4 254 237 A1

# FIG. 8

1. When similarity with existing false positive set is greater
   than false positive reference threshold
2. When similarity with false positives is greater
   than similarity with true positives

-> If both 1 and 2 are satisfied, event is classified as false positive

simirality of FP > threshold of FP
&&
simirality of FP > threshold of TP

40000 — Label Determination Module

False Positive

True Positive

1. When similarity with existing true positive set is greater
   than true positive reference threshold
2. When similarity with truepositives is greater
   than similarity with false positives

-> If both 1 and 2 are satisfied, event is classified as true positive

simirality of TP > threshold of TP
&&
simirality of TP > threshold of FP

FIG. 9

| Classifying security events into one or more groups | S001 |
| --- | --- |

↓

| Extracting meaningful words from at least one security event in each classified group | S002 |
| --- | --- |

↓

| Labeling each security event as true positive group or false positive group based on extracted meaningful words | S003 |
| --- | --- |

↓

| Quantifying security events in true positive group and security events in false positive group | S004 |
| --- | --- |

FIG. 10

510

Data Input Unit

510

Decoding
Execution Unit

520

Personal Information
Removal Unit

522

Special Character
Removal Unit

523

500

Undesired Character
Removal Unit

524

String
Segmentation Unit

525

# FIG. 11

| Steps | Regular Expressions |
|---|---|
| Removal of Personal Information | # IP Pattern<br>ip_parrern = r'((25[0-5]\|2[0-4][0-9]\|[01]?[0-9]?[0-9])\.){3}(25[0-5]\|2[0-4][0-9]\|[01]?[0-9]?[0-9])'<br><br># Resident Registration Number Pattern<br>res_pattern = r'([0-9]{2}(0[1-9]\|1[0-2])(0[1-9]\|[1-2][0-9]\|3[0,1])[-][1-4][0-9]{6})'<br><br># Phone Number Pattern<br>phone_pattern = r'([0-9]{2, 3}[-][0-9]{3, 4}[-][0-9]{4})'<br><br># Passport Number Pattern<br>passport_pattern = r'([MTSRGD][0-9]{8})' |
| Removal of Undesired Characters | # Removal of Words Consisting Only of Special Characters Row<br><br># Removal of Special Characters in String Ending with Special Character<br>special_char_pattern = '([@\-_.]{1,})(\w)'<br><br># Removal of Special Characters in String Starting with Special Character<br>special_char_pattern = '(\w)([@\-_.]{1,})'<br><br># Removal of Pattern of Character + Special Character + Character<br>special_char_pattern = '\s[a-zA-Z0-9]{1}[@\-_.]{1}[a-zA-Z0-9]{1}\s'<br><br># Removal of Pattern of Character + Digit + Character<br>special_char_pattern = '\s[a-zA-Z]{1}0-9]{1}[a-zA-Z]{1}\s'<br><br># Removal of Pattern of Digit + Character + Digit<br>special_char_pattern = '\s[0-9]{1}[a-zA-Z]{1}[0-9]{1}\s'<br><br># Removal of Pattern Consisting Only of Digits<br>special_char_pattern = '\s[0-9]{1} \s' |

# FIG. 12

Decode input security data — 700

Remove personal information from decoded security data — 701

Remove special characters from security data where personal information is removed — 702

Remove undesired characters from security data where special characters are removed — 703

Perform string segmentation on security data where undesired characters are removed — 704

# FIG. 13

```
┌─────────────────────────────────────────────────────────┐
│              Receive input security data                │──── 800
└─────────────────────────────────────────────────────────┘
                            │
                            ▼
┌─────────────────────────────────────────────────────────┐
│          Perform pre-processing on input security data  │──── 801
└─────────────────────────────────────────────────────────┘
                            │
                            ▼
┌─────────────────────────────────────────────────────────┐
│ Extract predetermined feature information from pre-processed security data │──── 802
└─────────────────────────────────────────────────────────┘
                            │
                            ▼
┌─────────────────────────────────────────────────────────┐
│   Perform normalization on extracted feature information according │──── 803
│           to predetermined normalization method        │
└─────────────────────────────────────────────────────────┘
                            │
                            ▼
┌─────────────────────────────────────────────────────────┐
│  Extract learning data from normalized feature information according │──── 804
│           to predetermined extraction method           │
└─────────────────────────────────────────────────────────┘
                            │
                            ▼
┌─────────────────────────────────────────────────────────┐
│      Generate artificial intelligence model by applying │──── 805
│  artificial intelligence algorithm to extracted learning data │
└─────────────────────────────────────────────────────────┘
```

## INTERNATIONAL SEARCH REPORT

| International application No. |
|---|
| **PCT/KR2021/017571** |

**A. CLASSIFICATION OF SUBJECT MATTER**

**G06F 21/55**(2013.01)i; **G06F 21/62**(2013.01)i; **G06F 16/33**(2019.01)i; **G06F 16/31**(2019.01)i; **G06F 21/57**(2013.01)i; **G06F 16/35**(2019.01)i; **G06N 20/00**(2019.01)i

According to International Patent Classification (IPC) or to both national classification and IPC

**B. FIELDS SEARCHED**

Minimum documentation searched (classification system followed by classification symbols)

G06F 21/55(2013.01); G06F 16/215(2019.01); G06F 16/22(2019.01); G06F 21/00(2006.01); G06N 20/00(2019.01); G06N 99/00(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 보안 이벤트(security event), 분류(classify), 유의미한 단어(meaningful word), 정탐 그룹(true positive group), 오탐 그룹(false positive group), 레이블링(labelling), 보안 데이터(security data)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0057903 A (KOREA INSTITUTE OF SCIENCE & TECHNOLOGY INFORMATION) 27 May 2020 (2020-05-27)<br>See paragraphs [0062], [0082], [0087], [0090], [0092]-[0093], [0096] and [0098]-[0099]; and figure 2. | 1-14 |
| Y | KR 10-2068507 B1 (SECULAYER CO., LTD.) 21 January 2020 (2020-01-21)<br>See paragraphs [0051], [0057] and [0065]; and figure 2b. | 1-7 |
| Y | KR 10-2020-0002149 A (DEEPLY INC.) 08 January 2020 (2020-01-08)<br>See paragraphs [0037] and [0045]; and claim 1. | 1-7 |
| Y | KR 10-2015-0136369 A (COMERSTONE CONSULTING CO., LTD.) 07 December 2015 (2015-12-07)<br>See paragraphs [0040]-[0041]; and figure 1. | 8-14 |
| A | KR 10-2068715 B1 (WISEITECH CO., LTD.) 21 January 2020 (2020-01-21)<br>See paragraphs [0036]-[0057]; and figure 1. | 1-14 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 March 2022** | **21 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/017571** |

### C.    DOCUMENTS CONSIDERED TO BE RELEVANT

| Category* | Citation of document, with indication, where appropriate, of the relevant passages | Relevant to claim No. |
|---|---|---|
| X | 송중석. 보안관제를 위한 AI 모델 기술 소개. NetSec-KR 2020. 17 July 2020. non-official translation ( SONG, Jungsuk. Introduction of AI Model Technology for Security Control.)<br>      See pages 1-29.<br>      * This document is a document declaring exceptions to lack of novelty in an earlier application that serves as a basis for claiming priority of the present international application. | 8-14 |

Form PCT/ISA/210 (second sheet) (July 2019)

| **INTERNATIONAL SEARCH REPORT** | International application No. |
|---|---|
| | **PCT/KR2021/017571** |

| **Box No. III** | **Observations where unity of invention is lacking (Continuation of item 3 of first sheet)** |
|---|---|

This International Searching Authority found multiple inventions in this international application, as follows:

Claims 1-7 pertain to a security data processing method and device for digitizing security events within a true negative group and a false positive group,
Claims 8-14 pertain to a security data processing method and device for segmenting character strings by removing personal information, special characters and disused characters of security data.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2019)

# EP 4 254 237 A1

## INTERNATIONAL SEARCH REPORT
### Information on patent family members

International application No.

**PCT/KR2021/017571**

| Patent document cited in search report | | | Publication date (day/month/year) | Patent family member(s) | | | Publication date (day/month/year) |
|---|---|---|---|---|---|---|---|
| KR | 10-2020-0057903 | A | 27 May 2020 | KR | 10-2271449 | B1 | 01 July 2021 |
| | | | | WO | 2020-101108 | A1 | 22 May 2020 |
| KR | 10-2068507 | B1 | 21 January 2020 | None | | | |
| KR | 10-2020-0002149 | A | 08 January 2020 | KR | 10-2189362 | B1 | 11 December 2020 |
| | | | | WO | 2020-004867 | A1 | 02 January 2020 |
| KR | 10-2015-0136369 | A | 07 December 2015 | None | | | |
| KR | 10-2068715 | B1 | 21 January 2020 | None | | | |

Form PCT/ISA/210 (patent family annex) (July 2019)